# EUROPEAN PATENT SPECIFICATION

(11) **EP 2 986 680 B1**
(45) Date of publication and mention of the grant of the patent: **17.05.2017**
(21) Application number: 14723629.3
(22) Date of filing: 08.04.2014
(51) Int. Cl.: C09D 7/00, C08K 3/00, C09D 5/00

(54) **BURIED CLAY/NANOSILICA STATIC DISSIPATIVE COATINGS**
STATISCHE DISSIPATIVE VERGRABENE TON/NANOSILICA-BESCHICHTUNGEN
REVÊTEMENTS ENTERRÉS DISSIPATIFS DE L'ÉLECTRICITÉ STATIQUE EN ARGILE/NANOSILICE

(30) Priority: 18.04.2013 US 201361813406 P
(43) Date of publication of application: 24.02.2016
(73) Proprietor: 3M Innovative Properties Company, St. Paul, MN 55133-3427 (US)
(72) Inventor: MEULER, Adam J., Saint Paul, Minnesota 55133-3427 (US); SCHMIDT, Daniel J., Saint Paul, Minnesota 55133-3427 (US); JING, Naiyong, Saint Paul, Minnesota 55133-3427 (US)
(74) Representative: Herzog, Fiesser & Partner Patentanwälte PartG mbB
(86) International application number: PCT/US2014/033257
(87) International publication number: WO 2014/172139

(56) References cited:
- EP-A1- 0 334 400
- EP-A1- 0 444 326
- EP-A1- 0 593 111
- EP-A2- 1 020 762
- WO-A2-2007/062391
- US-A- 5 551 975
- US-A1- 2011 118 393

## Description

### TECHNICAL FIELD

The present disclosure broadly relates to silica nanoparticle compositions that include a clay material, and more particularly to compositions including an amorphous silica matrix that includes silica nanoparticles and clay particles dispersed in the amorphous silica matrix, and to articles having a buried antistatic layer that includes the amorphous silica matrix, and having an overcoat layer over the buried antistatic layer.

### BACKGROUND

Dissipation of static charge is important in many fields of endeavor, where it is desirable to prevent electrical surges/sparks resulting in damage to electrical components, or accidental ignition of volatile flammable vapors. Examples include electronic device (e.g., plasma display screen) manufacture, electronic component packaging, abrasive belts, and polymer film web handling.

To combat these problems, antistatic agents are commonly used. An antistatic agent is a compound used for treatment of materials or their surfaces in order to reduce or eliminate buildup of static electricity generally caused by a triboelectric effect. Its role is to make the surface or the material itself slightly conductive, either by being conductive itself, or by absorbing moisture from the air, so some humectants can be used. The molecules of an antistatic agent often have both hydrophilic and hydrophobic areas, similar to those of a surfactant; the hydrophobic side interacts with the surface of the material, while the hydrophilic side interacts with the air moisture and binds the water molecules.

There remains a need for additional materials that can reduce the accumulation of, and/or dissipate, static charge.

### SUMMARY

The present disclosure describes compositions and methods that can produce a multilayered antistatic coating on articles, including a buried antistatic layer that has an amorphous matrix of silica nanoparticles and clay particles dispersed in the amorphous silica matrix.

In one aspect, the present disclosure includes a method of forming a multilayer antistatic coating on a substrate, the method including providing a nanosilica/clay ("first") coating composition comprising an aqueous media, silica nanoparticles dispersed in the aqueous media, as well as clay particles dispersed in the aqueous media. The silica nanoparticles have an average particle size in the longest dimension of up to 100 nm, and the clay particles have an average particle size in the longest dimension in a range from 20 nm to 1000 nm. A weight ratio of the clay particles to the silica nanoparticles is in a range from 0.01 to 0.25. The nanosilica/clay coating composition has a pH of less than or equal to 4.

The method of the first aspect further includes contacting the nanosilica/clay coating composition with a surface of a substrate, and at least partially drying the nanosilica/clay coating composition to form a layer of an antistatic composition on the surface of the substrate. The antistatic composition includes an amorphous matrix of the silica nanoparticles, and the clay particles are dispersed in the amorphous matrix.

The method of the first aspect further includes providing an overcoat layer comprising a layer of an organic polymer disposed on the layer of the antistatic composition, thereby forming the multilayer antistatic coating on the substrate.

In some embodiments of the method of the first aspect, providing the overcoat layer comprises coating a second coating composition onto the layer of the antistatic composition, and at least partially curing the second coating composition to form the layer of an organic polymer, wherein the second coating composition comprises a fluoropolymer, a silicone, a hydrocarbon polymer, copolymer thereof, or blend thereof.

In some other embodiments of the method of the first aspect, providing the overcoat layer comprises laminating an overcoat film onto the layer of the antistatic composition, wherein the overcoat film comprises the organic polymer, and wherein the organic polymer comprises a fluoropolymer, a silicone, a hydrocarbon polymer, copolymer thereof, or blend thereof.

In a second aspect, the present disclosure includes an article that includes a substrate having a multilayer antistatic coating, the coating having an optically transparent overcoat layer over a layer of an antistatic composition. The antistatic composition includes an amorphous matrix of silica nanoparticles having an average particle size in the longest dimension of up to 100 nm, and clay particles dispersed in the amorphous matrix of silica nanoparticles, the clay particles having an average particle size in the longest dimension in a range from 20 nm to 1000 nm. The optically transparent overcoat layer comprises a fluoropolymer, a silicone, a hydrocarbon polymer, copolymer thereof, or blend thereof.

Advantageously, multilayer antistatic coatings according to the present disclosure are typically transparent, durable, and unexpectedly exhibit good antistatic properties.

As used herein:
the term "antistatic article" refers to an article having a multilayer antistatic coating, wherein at least a portion of a surface of the multilayer antistatic coating has electrical charge dissipating properties;
the term "dispersion of silica nanoparticles" refers to a dispersion wherein individual silica nanoparticles are dispersed, and does not refer to a dispersion of fumed silica, which has sintered primary silica particles aggregated into chains;
the term "essentially free of " means containing less than one percent by weight of, typically less than 0.1 percent by weight of, and more typically less than 0.01 percent by weight of;
the term "essentially free of non-volatile organic compounds" means containing less than one percent by weight of organic compounds having a boiling point above 150° Celsius at 1 atmosphere (100 kPa) of pressure;
the term "nanoparticle" refers to a particle having a particle size in the longest dimension of from 1 to 200 nanometers;
the term "nonspherical" as used herein means all 3 dimensional shapes other than spherical ones, including but not limited to particles having needle-like elongated shapes, sting-like elongated shapes, rod-like elongated shapes, chain-like elongated shapes, filamentary elongated shapes, and the like;
the term "organic compound" refers to any compound containing at least one carbon-carbon and/or carbon-hydrogen bond;
the term "particle size" refers to the longest dimension of a particle, which is the diameter for a spherical particle;
the term "silica", used in reference to silica nanoparticles and silica sols, refers to a compound represented by the molecular formula SiO₂ •(H₂O)ₙ, wherein n is a number greater than or equal to zero;
the term "spherical" as used herein means a three dimensional shape, all points of which are equidistance from a fixed point; and
the term "substantially light transmissive" refers to at least 80 percent of light in the wavelength range of 400 to 800 nanometers passes through a coating (or article) of the present disclosure. For example, at least 85 percent, at least 90 percent, at least 95 percent, or even at least 98 percent of light in this wavelength light is transmitted through the coating (or article) of the present disclosure having a thickness in a range of from 0.01 to 100 micrometers.

The above summary of the present disclosure is not intended to describe each embodiment of the present invention. The details of one or more embodiments of the invention are also set forth in the description below. Other features, objects, and advantages of the invention will be apparent from the description and from the claims.

### BRIEF DESCRIPTION OF DRAWINGS

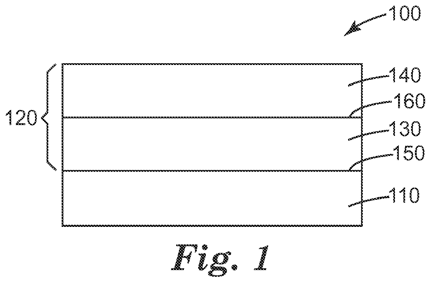

FIG. 1 is a schematic profile view of an exemplary article 100 according to the present disclosure.

It should be understood that numerous other modifications and embodiments can be devised by those skilled in the art, which fall within the scope and spirit of the principles of the disclosure. The figure may not be drawn to scale.

### DETAILED DESCRIPTION

Unless otherwise noted, all parts, percentages, ratios, etc. in the Examples and the rest of the specification are by weight.

As used herein, forms of the words "comprise", "have", and "include" are legally equivalent and open-ended. Therefore, additional non-recited elements, functions, steps or limitations may be present in addition to the recited elements, functions, steps, or limitations.

Referring to FIG. 1, a coated article 100 of the present disclosure comprises substrate layer 110 and a multilayer antistatic coating 120 disposed on substrate layer 110. The multilayer antistatic coating includes an antistatic layer 130 and an overcoat layer 140. Antistatic layer 130 is disposed on a major surface 150 of substrate layer 110, and overcoat layer 140 is disposed on a major surface 160 of antistatic layer 130. In other words, antistatic layer 130 is disposed between substrate layer 110 and overcoat layer 140, and is effectively "buried" by overcoat layer 140. Surprisingly, even though antistatic layer 130 is buried under overcoat layer 140, antistatic coating 120 can provide surprisingly good antistatic characteristics for coated article 100, as well as good durability.

In some embodiments, an intervening layer (not shown) can be included between substrate layer 110 and multilayer antistatic coating 120. The intervening layer (not shown) can be included, for example, to provide enhanced adhesion between substrate layer 110 and multilayer antistatic coating 120.

Typically, multilayer antistatic coating 120 according to the present disclosure is at least substantially light transmissive; however this is not a requirement. Either or both of antistatic layer 130 and overcoat layer 140 can be substantially light transmissive. Substrate 110 can also be substantially light transmissive.

The antistatic layer 130 of the present disclosure comprises an antistatic composition that comprises an amorphous matrix of silica nanoparticles having an average particle size of up to 100 nm, and clay particles dispersed in the amorphous matrix of silica nanoparticles, the clay particles having an average particle size in the longest dimension in a range from 20 nm to 1000 nm.

Typically, antistatic layer 130 has a thickness in the range of from 0.01 to 100 micrometers, 0.01 to 10 micrometers, or even (and desirably) 0.01 to 3 micrometers, although this is not a requirement.

Some clay coatings can be useful, for example, as antistatic coatings. It has been found that the addition of small amounts of clay to nanosilica can provide a "nanosilica/clay" coating having good antistatic properties in combination with good durability properties. Addition of overcoat layer 140 of the present disclosure can provide enhanced durability, while the "buried" nanosilica/clay antistatic layer 130 can still provide surprisingly good antistatic characteristics.

The silica nanoparticles have an average particle size in the longest dimension in a range from 2 nm to 200 nm, or more preferably in a range from 2 nm to 100 nm. Of course, silica particles with a particle size greater than 200 nm (e.g., up to 2 micrometers in particle size) may also be included, but typically in a minor amount. The silica nanoparticles can be polydispersed or mono-dispersed. When polydispersed, the nanosilica can have an average particle size of up to 100 nm. When mono-dispersed, the nanosilica preferably have an average particle size of 45 nm or less, or more preferably 25 nm or less. The average primary particle size may be determined, for example, using transmission electron microscopy. The silica nanoparticles can be either spherical or nonspherical.

Nanoparticles (e.g., silica nanoparticles) included in the nanosilica/clay coating composition can be spherical or non-spherical with any desired aspect ratio. Aspect ratio refers to the ratio of the average longest dimension of the nanoparticles to their average shortest dimension. The aspect ratio of non-spherical nanoparticles is often at least 2:1, at least 3:1, at least 5:1, or at least 10:1. Non-spherical nanoparticles may, for example, have the shape of rods, ellipsoids, and/or needles. The shape of the nanoparticles can be regular or irregular. The porosity of coatings can typically be varied by changing the amount of regular and irregular-shaped nanoparticles in the nanosilica/clay coating composition and/or by changing the amount of spherical and non-spherical nanoparticles in the nanosilica/clay coating composition.

Acicular silica nanoparticles may be used provided that the average silica nanoparticle size constraints described above are achieved.

In some embodiments, the silica nanoparticles have a surface area greater than 150 square meters per gram (m²/g), greater than 200 m²/g, or even greater than 400 m²/g.

In some embodiments, the total weight of the silica nanoparticles in the nanosilica/clay coating composition is at least 0.1 percent by weight, typically at least 1 percent by weight, and more typically at least 2 percent by weight. In some embodiments, the total weight of the silica nanoparticles in the composition is no greater than 50 percent by weight, or no greater than 40 percent by weight, more desirably no greater than 10 percent by weight, and even more desirably no greater than 7 percent by weight.

The silica nanoparticles in nanosilica/clay coating compositions of the present disclosure can be obtained from, for example, an "initial silica sol composition". Silica sols, which are stable dispersions of silica nanoparticles in aqueous liquid media, are well-known in the art and available commercially. Typically, the initial silica sol composition does not include, or is essentially free of, fumed silica, although this is not a requirement.

A nanosilica/clay coating composition of the present disclosure has silica nanoparticles dispersed in aqueous liquid medium, having a pH less than or equal to 4, less than or equal to 3, less than or equal to 2, less than or equal to 1, or even less than or equal to 0.5, and clay particles dispersed in the aqueous liquid medium. In typical embodiments, the pH is no lower than 0.5, or even no lower than 1.

Silica nanoparticle dispersions (e.g., silica sols) in water or water-alcohol solutions are available commercially, for example, under such trade names as "LUDOX" (marketed by E. I. du Pont de Nemours and Co., Wilmington, Delaware), "NYACOL" (marketed by Nyacol Co., Ashland, Massachusetts), and "NALCO" (manufactured by Ondea Nalco Chemical Co., Oak Brook, IL). One useful silica sol is "NALCO 2326", which is available as a silica sol with an average particle size of 5 nanometers, pH = 10.5, and solid content 15 percent solids by weight. Other commercially available silica nanoparticles include those available under the trade designations "NALCO 1115" (average particle size of 4 nm, 15 percent solids by weight dispersion, pH = 10.4), "NALCO 1130" (average particle size of 8 nm, 30 percent solids by weight dispersion, pH = 10.2), "NALCO 1050" (average particle size 20 nm, 50 percent solids by weight dispersion, pH = 9.0), NALCO 2327 (average particle size of 20 nm, 40 percent solids by weight dispersion, pH = 9.3), "NALCO 1030" (average particle size of 13 nm, 30 percent solids by weight dispersion, pH = 10.2),

Useful acicular silica nanoparticles may be obtained as an aqueous suspension under the trade name "SNOWTEX-UP" by Nissan Chemical Industries (Tokyo, Japan). The mixture consists of 20 to 21 weight percent of acicular silica, less than 0.35% weight percent of Na₂O, and water. The particles are about 9 to 15 nanometers in diameter and have lengths of 40 to 200 nanometers. The suspension has a viscosity of <100 mPa at 25 °C, a pH of about 9 to 10.5, and a specific gravity of about 1.13 at 20 °C.

Other useful acicular silica nanoparticles may be obtained as an aqueous suspension under the trade name "SNOWTEX-PS-S" and "SNOWTEX-PS-M" by Nissan Chemical Industries, having morphology similar to of a string of pearls. The mixture consists of 20 to 21 weight percent of silica, less than 0.2 weight percent of Na₂O, and water. The SNOWTEX-PS-M particles are about 18 to 25 nanometers in diameter and have lengths of 80 to 150 nanometers. The particle size can be determined by dynamic light scattering methods. The suspension has a viscosity of <100 mPas at 25 °C, a pH of about 9 to 10.5, and a specific gravity of about 1.13 at 20 °C. The SNOWTEX-PS-S has a particle diameter of 10 to 15 nm and a length of 80 to 120 nm.

Silica sols having a pH of at least 8 can also be prepared according to the methods described in U.S. Patent No. 5,964,693 (Brekau et al.).

The initial silica sol composition can have a pH greater than 6, more typically greater than 7, more typically greater than 8, and even more typically greater than 9. The initial silica sol composition is acidified by addition of inorganic acid until it has a pH of less than or equal to 4, typically less than 3, or even less than 2 thereby providing the coating composition. The pH of the initial silica sol can have a lower limit equal to 0.5 or even equal to 1. Useful inorganic acids (i.e., mineral acids) include, for example, hydrochloric acid, nitric acid, sulfuric acid, phosphoric acid, perchloric acid, chloric acid, and combinations thereof. Typically, the inorganic acid is selected such that it has a pKa of less than or equal to two, less than one, or even less than zero, although this is not a requirement. Without wishing to be bound by theory, the present inventors believe that some chemical bond formation or even thick bond formation between the silica nanoparticles occurs as the pH falls, resulting in a dispersion comprising slightly agglomerated nanoparticles.

It has been observed that acidification of the initial silica sol can be carried out either before or after addition of clay particles to the silica sol, to provide a coating composition of the present disclosure having a pH of less than or equal to 4.

When an initial silica sol of the present disclosure is acidified with an inorganic acid and then used in the preparation of an antistatic layer 130 of the present disclosure, residual amounts of the inorganic acid can be expected to be present in antistatic layer 130. The detection of residual amounts of the inorganic acid (or at least the anion component thereof) in antistatic layer 130 in a multilayer antistatic coating 120 can even be indicative of the inorganic acid that was used in acidifying the initial silica sol.

The clay particles have an average particle size in the longest dimension in a range from 20 nm to 1000 nm. In some embodiments, the clay particles desirably have an average particle size in the longest dimension in a range from 100 nm to 1000 nm. The selection of average particle size for clay particles can depend in part on the selection of a particular type of clay, as will be described.

Clay materials suitable for use in compositions, methods, and articles of the present disclosure include those in the geological class of the smectites, and in particular, montmorillonite clays.

Typical examples of montmorillonite clays include "CLOISITE", "MINERAL COLLOID", "NANOFIL", "GELWHITE", and "OPTIGEL" clays (from Southern Clay Products, Gonzales, TX); "VEEGUM" clays, for example, "VEEGUM PRO" and "VEEGUM F" (from R. T. Vanderbilt, Murray, KY); and "NANOMER" clays (from Nanocor, Inc., Hoffman Estates, IL).

Natural clay minerals typically exist as layered silicate minerals and less frequently as amorphous minerals. A layered silicate mineral has SiO₄ tetrahedral sheets arranged into a two-dimensional network structure. A 2:1 type layered silicate mineral has a laminated structure of several to several tens of silicate sheets having a three layered structure in which a magnesium octahedral sheet or an aluminum octahedral sheet is sandwiched between two sheets of silica tetrahedral sheets.

Synthetic clays of the present disclosure predominantly assume the form of agglomerates due to consolidation of the primary particles. Such agglomerates may reach diameters of several thousand nanometers, such that the desired characteristics associated with the nanoscale nature of the particles cannot be achieved. The particles may be deagglomerated, for example, by grinding as described in European Patent No. 637,616 (Nargiello et al.) or by dispersion in a suitable carrier medium, such as water or water/alcohol and mixtures thereof.

The ratio of the largest dimension of a particle to the smallest dimension of a particle is known as the particle's aspect ratio. The aspect ratio of the nanoparticles, in some cases, is of interest in forming films with the desired characteristics. The average aspect ratio of individual particles of montmorillonite clays in the antistatic layer of the present disclosure is desirably in a range from 20 to 1000, desirably 70 to 500.

In some embodiments, the selection of clay particle size can depend to the selection of the type of clay. When the clay is a montmorillonite, the average particle size is desirably in a range from 100 nm to 1000 nm.

In some embodiments of nanosilica/clay coating compositions of the present disclosure, a weight ratio of the clay particles to the silica nanoparticles is at least 0.01, or at least 0.02, or even at least 0.05. In some embodiments of nanosilica/clay coating compositions of the present disclosure, a weight ratio of the clay particles to the silica nanoparticles is at most 1.0, at most 0.5, at most 0.43, at most 0.33, at most 0.18, or even at most 0.11. In some embodiments of nanosilica/clay coating compositions of the present disclosure, a weight ratio of the clay particles to the silica nanoparticles is in a range from 0.01 to 0.33, or in a range from 0.05 to 0.18, or even in a range from 0.05 to 0.11.

In some embodiments, the nanosilica/clay coating composition is essentially free of organic polymer. In some embodiments, the nanosilica/clay coating composition is essentially free of non-volatile organic compounds. In some embodiments, the nanosilica/clay coating composition is essentially free of organic surfactants.

The aqueous liquid medium of the nanosilica/clay coating composition may comprise (in addition to water) at least one volatile organic solvent. Examples of suitable volatile organic solvents include those volatile organic solvents that are miscible with water such as, e.g., methanol, ethanol, isopropanol, and combinations thereof. However, for many applications, reduction or elimination of volatile organic compounds will be desirable, and advantageously the present disclosure may be practiced using initial silica sol compositions or first coatable compositions that are essentially free of volatile organic solvent.

In some embodiments, the total amount of solids in the nanosilica/clay coating composition is in a range from 1 to 40 weight percent of a total weight of the nanosilica/clay coating composition, or more preferably in a range from 5 weight percent to 10 weight percent of a total weight of the nanosilica/clay coating composition.

Once made, the nanosilica/clay coating composition is typically stable over long periods of time, over a range of temperatures, although this is not a requirement. The nanosilica/clay coating composition may be coated onto a substrate and at least partially dried, typically substantially completely dried. Without wishing to be bound by theory, it is believed that during the drying process, condensation processes lead to chemical bonding between the silica nanoparticles and/or agglomerates at points of contact to form a silica matrix.

The nanosilica/clay coating composition can be contacted with a surface of a substrate and at least partially dried. Suitable methods of drying the nanosilica/clay coating composition include, for example, evaporation in air at about room temperature, ovens, heated air blowers, infrared heaters, and hot cans. Drying is typically carried out until the nanosilica/clay coating composition is substantially completely dry, although this is not a requirement. Once contacted with the substrate and at least partially dried, the antistatic layer may be aged for a period of time such as for example, at least 1 hour (hr), at least 4 hrs, at least 8 hrs, at least 24 hrs, at least 72 hrs, at least 1 week, or even at least 2 weeks.

The antistatic layer 130 of the present disclosure, after drying, may comprise silica in a range from 30 to 99 percent by weight of silica, desirably from 50 to 97.5 percent by weight of silica, more desirably from 50 to 90 percent by weight of silica, or even from 75 to 90 percent by weight of silica, although other amounts may also be used.

The overcoat layer 140 can comprise a suitable organic polymer. Examples of suitable organic polymers can include fluoropolymers, silicones, hydrocarbon polymers (e.g., poly(meth)acrylates), copolymers thereof, or blends thereof.

Suitable fluoropolymer materials useful for overcoat layer 140 may be described by broadly categorizing them into one of two basic classes. A first class includes those amorphous fluoropolymers comprising interpolymerized units derived from vinylidene fluoride (VDF) and hexafluoropropylene (HFP) and optionally tetrafluoroethylene (TFE) monomers. Examples of such are commercially available from 3M Company, as "DYNEON FLUOROELASTOMER FC 2145" and "DYNEON FLUOROELASTOMER FT 2430". Additional amorphous fluoropolymers contemplated by this invention are for example VDF-chlorotrifluoroethylene copolymers, commercially known as "KEL-F 3700", available from 3M Company. As used herein, amorphous fluoropolymers are materials that contain essentially no crystallinity or possess no significant melting point as determined for example by differential scanning caloriometry (DSC). For the purpose of this discussion, a copolymer is defined as a polymeric material resulting from the simultaneous polymerization of two or more dissimilar monomers and a homopolymer is a polymeric material resulting from the polymerization of a single monomer.

The second significant class of fluoropolymers useful for overcoat layer 140 are those homo and copolymers based on fluorinated monomers such as TFE or VDF which do contain a crystalline melting point such as polyvinylidene fluoride (PVDF, available commercially from 3M Company as "DYNEON PVDF", or more preferable thermoplastic copolymers of TFE such as those based on the crystalline microstructure of TFE-HFP-VDF. Examples of such polymers are those available from 3M Company under the trade name "DYNEON FLUOROPLASTIC THV 200".

The preferred fluoropolymers are copolymers formed from the constituent monomers known as tetrafluoroethylene ("TFE"), hexafluoropropylene ("HFP"), and vinylidene fluoride ("VDF," "VF2,"). The monomer structures for these constituents are shown below:
TFE:

   CF₂=CF₂ (1)
VDF:

   CH₂=CF₂ (2)
HFP:

   CF₂=CF-CF₃ (3)

The preferred fluoropolymer consists of at least two of the constituent monomers (HFP and VDF), and more preferably all three of the constituents monomers in varying molar amounts. Additional monomers not depicted in (1), (2) or (3) but also useful for overcoat layer 140 include perfluorovinyl ether monomers of the general structure CF₂=CF-OR_{f}, wherein R_{f} can be a branched or linear perfluoroalkyl radicals of 1-8 carbons and can itself contain additional heteroatoms such as oxygen. Specific examples are perfluoromethyl vinyl ether, perfluoropropyl vinyl ethers, perfluoro(3-methoxy-propyl) vinyl ether. Additional examples are found in PCT Published Patent Application No. WO 00/12574 (Worm), and in U.S. Patent No. 5,214,100 (Carlson).

For the purposes of the present disclosure, crystalline copolymers with all three constituent monomers shall be hereinafter referred to as "THV", while amorphous copolymers consisting of VDF-HFP and optionally TFE is hereinafter referred to as "FKM", or "FKM elastomers" as denoted in ASTM D 1418. THV and FKM elastomers have the general formula (4): 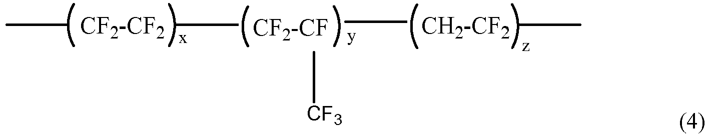 wherein x, y and z are expressed as molar percentages.

For fluorothermoplastics materials (crystalline) such as THV, x is greater than zero and the molar amount of y is typically less than about 15 molar percent. One commercially available form of THV contemplated for use in the present invention is "DYNEON FLUOROTHERMOPLASTIC THV 220", a polymer that is manufactured by Dyneon LLC, of Saint Paul, Minnesota. Other useful fluorothermoplastics meeting these criteria and commercially available, for example, from Dyneon LLC, are sold under the trade names "THV 200", "THV 500", and "THV 800".

In addition, other fluoroplastic materials not specifically falling under the criteria of the previous paragraph are also contemplated by the present invention. For example, PVDF-containing fluoroplastic materials having very low molar levels of HFP are also contemplated by the present invention and are sold under the trade name "DYNEON PVDF 6010" or "DYNEON PVDF 3100", available from Dyneon LLC; and "KYNAR 740", "KYNAR 2800", "KYNAR 9301", available from Elf Atochem North America Inc. of Delaware, OH. Further, other fluoroplastic materials are specifically contemplated wherein x is zero and wherein y is between about 0 and 18 percent. Optionally the microstructure shown in (4) can also contain additional non-fluorinated monomers such as ethylene, propylene, or butylenes, examples of which are commercially available as "DYNEON ETFE" and "DYNEON THE" fluoroplastics.

For fluoroelastomers compositions (amorphous) useful for overcoat layer 140, x can be zero so long as the molar percentage of y is sufficiently high (typically greater than about 18 molar percent) to render the microstructure amorphous. One example of a commercially available elastomeric compound of this type is available from Dyneon LLC, under the trade name "DYNEON FLUOROELASTOMER FC 2145".

Additional fluoroelastomer compositions useful for overcoat layer 140 exist where x is greater than zero. Such materials are often referred to as elastomeric TFE containing terpolymers. One example of a commercially available elastomeric compound of this type is available from Dyneon LLC, and is sold under the trade name "DYNEON FLUOROELASTOMER FT 2430".

Other fluorelastomeric compositions not classified under the preceding paragraphs are also useful for overcoat layer 140. For example, propylene-containing fluoroelastomers are a class useful in this invention. Examples of propylene-containing fluoroelastomers known as base resistant elastomers ("BRE") and are commercially available from Dyneon LLC under the trade name "DYNEON BRE 7200", available from 3M Company. Other examples of TFE-propylene copolymer can also be used are commercially available under the tradename "AFLAF", available from Asahi Glass Company of Charlotte, North Carolina.

In one preferred approach, these polymer compositions further comprise reactive functionality such as halogen-containing cure site monomers ("CSM") and/or halogenated endgroups, which are interpolymerized into the polymer microstructure using numerous techniques known in the art. These halogen groups provide reactivity towards the other components of coating mixture and facilitate the formation of the polymer network. Useful halogen-containing monomers are well known in the art and typical examples are found in U.S. Patent No. 4,214,060 (Apotheker et al.), European Patent No. 398,241 (Moore), and European Patent No. 407,937 (Vincenzo et al).

In addition to halogen-containing cure site monomers, it is conceivable to incorporate nitrile-containing cure site monomers in the fluoropolymer microstructure. Such CSM's are particularly useful when the polymers are perfluorinated (i.e. contain no VDF or other hydrogen containing monomers). Specific nitrile-containing CSM's contemplated by this invention are described in U.S. Patent No. 6,720,360 (Grootaert et al.).

Optionally halogen cure sites can be introduced into the polymer microstructure via the judicious use of halogenated chain transfer agents which produce fluoropolymer chain ends that contain reactive halogen endgroups. Such chain transfer agents ("CTA") are well known in the literature and typical examples are: Br-CF₂CF₂-Br, CF₂Br₂, CF₂I₂, CH₂I₂. Other typical examples are found in U.S. Patent No. 4,000,356 (Weisgerber). Whether the halogen is incorporated into the polymer microstructure by means of a CSM or CTA agent or both is not particularly relevant as both result in a fluoropolymer which is more reactive towards UV crosslinking and co-reaction with other components such as acrylates (if included). An advantage to use of cure site monomers in forming the co-crosslinked network, as opposed to a dehydrofluorination approach (discussed below), is that the optical clarity of the formed polymer layer is not compromised since the reaction of the acrylate and the fluoropolymer does not rely on unsaturation in the polymer backbone in order to react. Thus, a bromo-containing fluoroelastomer such as "DYNEON E-15472", "DYNEON E-18905", or "DYNEON E-18402" available from Dyneon LLC, may be used in conjunction with, or in place of, THV or FKM as the fluoropolymer.

In another embodiment, the fluoropolymer microstructure is first dehydrofluorinated by any method that will provide sufficient carbon-carbon unsaturation of the fluoropolymer to create increased bond strength between the fluoropolymer and a hydrocarbon substrate or layer. The dehydrofluorination process is a well-known process to induced unsaturation and it is used most commonly for the ionic crosslinking of fluoroelastomers by nucleophiles such as diphenols and diamines. Furthermore, such a reaction is also possible with primary and secondary aliphatic monofunctional amines and will produce a DHF-fluoropolymer with a pendent amine side group. However, such a DHF reaction is not possible in polymers which do not contain VDF units since they lack the ability to lose HF by such reagents.

In addition to the main types of fluoropolymers useful in the context of the present disclosure, there is a third special case involving the use of perfluoropolymers or ethylene containing fluoropolymers which are exempt from the DHF addition reaction described above but nonetheless are reactive photochemically with amines to produce low index fluoropolymer coatings. Examples of such are copolymers of TFE with HFP or perfluorovinyl ethers, or 2,2-bistrifluoromethyl-4,5-difluoro 1,3 dioxole. Such perfluoropolymers are commercially available as "DYNEON PERFLUOROELASTOMER", "DUPONT KALREZ" or "DUPONT TEFLON AF". Examples of ethylene containing fluoropolymers are known as "DYNEON THE" or "DYNEON ETFE" copolymers. Although these polymers are not readily soluble in typical organic solvents, they can be solubilized in such perfluorinated solvents such as "HFE 7100" and "HFE 7200" (available from 3M Company). U.S. Patent Nos. 6,685,793 (Jing et al.) and 6,630,047 (Jing et al.) teach methods whereby such materials can be photochemically grafted and bonded to other substrates in the presence of amines.

As one of ordinary skill recognizes, other fluoropolymers and fluoroelastomers not specifically listed above may be available for providing overcoat layer 140. As such, the above listings of fluoropolymers and fluoroelastomers should not be considered limiting, but merely indicative of the wide variety of commercially available products that can be utilized.

The compatible organic solvent that is utilized in some embodiments of fluoropolymer materials for overcoat layer 140 is methyl ethyl ketone ("MEK"). However, other organic solvents including fluorinated solvents may also be utilized, as well as mixtures of compatible organic solvents, and still fall within the spirit and scope of the present disclosure. For example, other organic solvents contemplated include acetone, cyclohexanone, methyl isobutyl ketone ("MIBK"), methyl amyl ketone ("MAK"), tetrahydrofuran ("THF"), methyl acetate, isopropyl alcohol ("IPA"), and mixtures thereof.

Silicones are silicon-containing polymers or pre-polymers that can be cured or cross-linked to form a higher molecular weight silicon-containing polymer. Silicones include silicon together with carbon, hydrogen, oxygen and sometimes other chemical elements. Silicones are inert and synthetic compounds with a wide variety of forms and uses. Silicones are also known as polymerized siloxanes or polysiloxanes. Some non-limiting examples of silicone include polydimethylsiloxane, polymethylhydrosiloxane, fluorosilicones, phenylmethyl-dimethyl silicones and the like. Silicones have the chemical formula -[Si(R)₂-O]ₙ- where R is one or more organic groups such as methyl, ethyl and phenyl and n refers to the number of the repeating units in the backbone of the silicone polymer. In some embodiments, organic side groups can be used to link two or more -Si-O- backbones together. By varying the -Si-O- chain lengths, side groups and crosslinking, silicones can be synthesized with a wide variety of properties and compositions. They can vary in consistency from liquid to gel to rubber to hard plastic. The most common siloxane is linear polydimethylsiloxane (PDMS), a silicone oil. The second largest group of silicone materials is based on silicone resins, which are formed by branched and cage-like oligosiloxanes.

Suitable silicones useful for overcoat layer 140 can include, for example, silicones that form an abrasion-resistant hardcoat layer, a release coating, or a silicone rubber or silicone adhesive material.

Examples of silicones useful for forming an abrasion-resistant hardcoat layer can include those described in U.S. Patent Nos. 4,382,109 (Olson et al.), 5,041,313 (Patel), and 5,503,935 (Patel). For example, an organopolysiloxane free of silica or a heat curable silica-filled organopolysiloxane can be used. The heat curable organopolysiloxane composition free of silica is generally the partial hydrolysis and condensation product of at least one compound represented by the general formula (5):

R¹ₙ-Si-Z₍₄₋ₙ₎ (5)

wherein R¹ represents a monovalent hydrocarbon radical and a halogenated monovalent hydrocarbon radical, each Z represents a hydrolyzable group, and n may vary between 0 to 3 inclusive, preferably between 0 to 2 inclusive. More specifically, each Z is independently a member such as halogen, alkoxy, acyloxy and aryloxy. Upon hydrolysis, the compounds of formula (5) convert to the corresponding silanols. Subsequent to generation of the silanol, there is condensation of the hydroxyl substituents to form -Si-O-Si- bonding. The condensation is not complete, but rather the organopolysiloxane retains a quantity of silicon-bonded hydroxyl groups. This partial condensate can be characterized as a further-curable (i.e., further condensable) siloxanol polymer. During curing of the further-curable organopolysiloxane, the residual hydroxyl groups can condense to give a thermoset organopolysiloxane.

In instances where the organopolysiloxane composition is silica filled, the coating composition can include, for example, a dispersion of colloidal silica in a lower aliphatic alcohol-water solution of the partial condensate of a silanol having the formula (6):

R²-Si(OH)₃ (6)

wherein R² is selected from the group consisting of alkyl radicals containing from 1 to 3 carbon atoms, the vinyl radical, the 3,3,3-trifluoropropyl radical, the gamma-glycidoxypropyl radical and the gamma-methacryloxypropyl radical, with at least 70 percent by weight of said silanol being CH₃-Si(OH)₃. This composition generally contains from about 10 to about 50% by weight of solids, said solids consisting essentially of a mixture of from about 10 to about 70% by weight of colloidal silica and from about 30 to about 90 percent by weight of the partial condensate of a silanol. The partial condensate of a silanol, i.e., a siloxanol, is obtained, preferably, entirely from the condensation of CH₃-Si(OH)₃, however, the partial condensate may also optionally be comprised of a major portion which is obtained from the condensation of CH₃-Si(OH)₃ and a minor portion which is obtained from the condensation of monoethyltrisilanol, monopropyltrisilanol, monovinyltrisilanol, mono-gamma-glycidoxypropyltrisilanol, or mixtures thereof. The composition further contains sufficient acid to provide a pH in the range of 3.0 to 6.0. The pH is maintained in this range in order to prevent premature gellation and increase the shelf life of the silica filled organopolysiloxane top coat composition and to obtain optimum properties in the cured coating. Suitable acids include both organic and inorganic acids such as hydrochloric, chloroacetic, acetic, citric, benzoic, formic, propionic, maleic, oxalic, glycolic and the like. The acid can be added to either the silane, which hydrolyzes to form the silanol component of the composition, or the hydrosol prior to mixing the two components.

An example of a commercially available silica-filled methylpolysiloxane polymer includes that available from California Hard Coating Co., Chula Vista, CA, under the trade designation "PERMA-NEW 6000".

Some silicone materials have been found to be especially well suited for use as release liners, due to the low tendency for some adhesives (e.g., pressure-sensitive adhesives) to adhere to surfaces coated with substantially pure polydimethylsiloxane. A number of materials have been developed which consist primarily of polydimethylsiloxane substituted with small amounts of various reactive functional groups for chemically crosslinking the liquid silicone on the substrate after coating. Such silicone materials, when used in overcoat layer 140, can provide useful release liner properties.

Silicones for forming an overcoat layer 140 having useful release liner properties can include, for example, substantially pure polydimethylsiloxane. For example, U.S. Patent No. 5,753,346 (Leir et al.) describes radiation curable silicone release coating compositions comprising: (a) about 1 to about 50 percent by weight of a cationically reactive polydiorganosiloxane liquid rubber having the following formula (7): 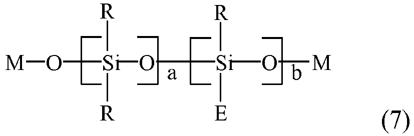 wherein R are monovalent moieties which can be the same or different selected from the group consisting of alkyl, substituted alkyl, aryl, and substituted aryl wherein at least about 50% of the total number of silicon atoms, preferably at least about 70%, have two methyl groups bonded thereto; E is an organic monovalent functional group comprising from about 1 to about 20 carbon atoms having at least one cationically co-reactive functional group; a and b both represent integers, wherein the sum of a plus b is an integer of about 10 to about 1200; b has a value ranging from about 0 to about 0.2 times a; a is an integer of about 10 to about 1000; and M is a silyl group which must contain at least one cationically co-reactive functional group when b=0 and may contain at least one cationically co-reactive group when b is greater than 0; (b) about 50 to about 99 percent by weight of at least one cationically co-reactive monomer copolymerizable with said cationically co-reactive functional group of said polydiorganosiloxane liquid rubber; wherein the percentages of (a) and (b) are based on the total weight of (a) plus (b); and (c) about 0.5 to about 4 parts by weight of a photoactive radiation activatable cationically reactive catalyst based on 100 parts by weight total of (a) plus (b). Preferably, the composition consists essentially of (a) (b) and (c). M can be further defined as a silyl group R³_{c} E_{d} Si-, wherein the sum of c plus d is equal to 3, and further wherein when b=0, d must be equal to or greater than 1 and wherein R³ are monovalent moieties which can be the same or different including but not limited to those selected from the group consisting of alkyl, substituted alkyl, aryl, substituted aryl, hydroxy and alkoxy.

Further description of silicones that can be used for forming an overcoat layer 140 having useful release liner properties are described in U.S. Patent No. 5,866,222 (Seth et al.), including block, segmented, or graft copolymer having polyorganosiloxane segments, or polyorganosiloxane copolymers admixed with MQ silicate resin (where "M" stands for Me₃SiO-, and "Q" stands for SiO₄).

Additional examples of silicones that can be used for forming an overcoat layer 140 having useful release liner properties are described in U.S. Patent No. 6,919,405 (Kinning et al.), including silicone polyurea segmented copolymer release materials. These materials may be represented by formula (8): 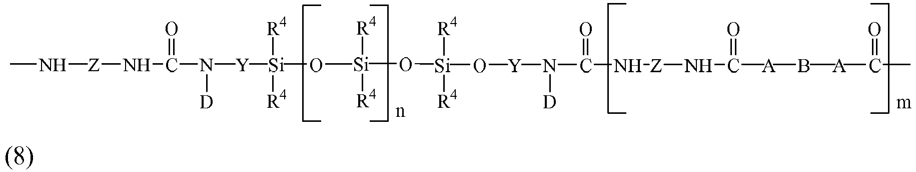 where Z is a divalent radical selected from the group consisting of phenylene, alkylene, aralkylene and cycloalkylene; Y is an alkylene radical of 1 to 10 carbon atoms; R⁴ is at least about 50% methyl or greater with the balance of the R⁴ radicals being selected from the group consisting of monovalent alkyl radicals having from 2 to 12 carbon atoms, a substituted alkyl radical having 2 to 12 carbon atoms, a vinyl radical, a phenyl radical, and a substituted phenyl radical; D is selected from the group consisting of hydrogen, and an alkyl radical of 1 to 10 carbon atoms; B is selected from the group consisting of alkylene, aralkylene, cycloalkylene, phenylene, polyethylene oxide, polypropylene oxide, polytetramethylene oxide, polyethylene adipate, polycaprolactone, polybutadiene, and mixtures thereof, and a radical completing a ring structure including A to form a heterocycle; A is selected from the group consisting of -O- and -N(R⁵)-, where R⁵ is selected from the group consisting of hydrogen, and alkyl radical of 1 to 10 carbon atoms, phenyl, and a radical which completes a ring structure including B to form a heterocycle; n is a number which is 10 or larger, and m is a number which can be 0 to about 25.

Also described in U.S. Patent No. 6,919,405 (Kinning et al.) are siloxane-acrylate block copolymers useful as silicone release materials, which can be useful in for forming overcoat layer 140, including, for example, graft copolymers.

Silicone rubber is one common form of silicones and is typically heat-resistant and rubberlike and may be used as an adhesive. Silicone rubber materials can also be useful as an overcoat layer 140, including, for example, those platinum cured or addition cured silicone rubber materials described in U.S. Patent Nos. 6,746,761 (Janoff), 6,892,817 (Janoff), and U.S. Published Patent Application No. 2013/0005843 (Yeung). For example, U.S. Published Patent Application No. 2013/0005843 (Yeung) describes a self-adhesive silicone rubber composition that includes a silicone rubber forming base and at least one adhesive agent mixed in the silicone rubber forming base prior to curing of the silicone rubber forming base.

The peroxide cross-linking agent which is used in fabrication of the silicone rubber forming base may include benzoyl peroxide, di-(2,4-dichlorobenzoyl)peroxide, dicumyl peroxide, di-tert-butyl peroxide, p-monochlorobutyl peroxide, 2,5-dimethyl-2,5-di-tert butylperoxy hexane, di-tert-butylperoxy peroxide, 2,5-dimethyl-2,5-bis(tert-butylperoxy)hexane and tert-butylcumyl peroxide. An exemplary cross-linking agent is 2,5-dimethyl-2,5-di-tert-butylperoxy hexane. Other suitable cross-linking agents include commercially available cross-linking agents with trade names "C-8", "C-8A", and "C-8B", available from the Shin-Etsu Silicone Corp. of Japan. The cross-linking agent may be used in a quantity of from about 0.3% to about 4% by weight based on the weight of other feed stocks.

Examples of Pt-catalysts which are suitable for fabrication of the silicone rubber base include, but are not limited to, platinum black, chloroplatinic acid, platinum tetrachloride, a complex of chloroplatinic acid-olefins, a complex of chloroplatinic acid-methylvinyl siloxane and the like.

Examples of organo-hydropolysiloxane cross-linking agents which are suitable for fabrication of the silicone rubber forming base include but are not limited to trimethylsiloxy-terminated methylhydropolysiloxane, trimethylsiloxy-terminated dimethylsiloxane-methylhydrosiloxane copolymer and dimethylphenylsiloxy-terminated methylphenylsiloxane methylhydrosiloxane copolymer.

Exemplary cure mechanisms for silicone adhesives include: peroxide cure; platinum cure; dehydrogenation; and moisture cure.

A peroxide cure for silicone adhesives can be effected with, for example, a peroxide that contains sulfur (e.g., "KR-101-10", "KR-120", etc., obtainable from Shin-Etsu Silicone Taiwan Co. Ltd.). A peroxide cure for silicone adhesives can be represented as follows:

Si-CH3 + R-O-O-R → Si-CH2-CH2-Si + 2 ROH (9)

A platinum cure for silicone adhesives can be effected with, for example, platinum metal (e.g., "KR-820", "X-40-3004A", etc., obtainable from Shin-Etsu Silicone Taiwan Co. Ltd.). A platinum cure for silicone adhesives can be represented as follows:

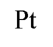

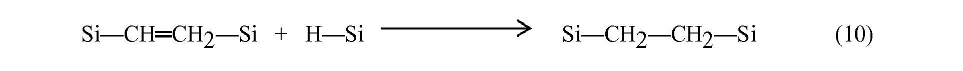

A dehydrogenation cure for silicone adhesives can be effected with, for example, a titanium dehydrogenation catalyst (e.g., "KR-105" obtainable from Shin-Etsu Silicone Taiwan Co. Ltd.). A dehydrogenation cure for silicone adhesives can be represented as follows:

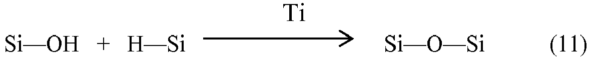

A moisture cure for silicone adhesives can be effected with, for example, water. A moisture cure for silicone adhesives can be represented as follows:

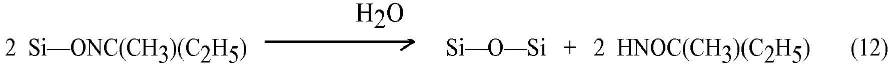

In some embodiments where overcoat layer 140 includes a silicone, it may be desirable to include an acrylic polymer layer as a primer layer on antistatic layer 130, to enhance adhesion of a silicone-containing overcoat layer to antistatic layer 130.

As one of ordinary skill recognizes, other silicones not specifically listed above may be available for providing overcoat layer 140. As such, the above listings of silicones should not be considered limiting, but merely indicative of the wide variety of available silicones that can be utilized.

Suitable hydrocarbon polymers useful for overcoat layer 140 can include, for example, pressure-sensitive adhesives (e.g., poly(meth)acrylates, polyolefines, or rubbers) or structural adhesives (e.g., epoxy adhesives, polyurethanes, cyanoacrylates, toughened acrylics, phenolics, or vinyl acetates), or acrylic hardcoat materials (e.g., urethane (meth)acrylate, optionally including inorganic oxide particles). The inclusion of an antistatic layer 103 in articles having an adhesive for overcoat layer 140 can beneficially diminish levels of static electrictical charge developed upon, for example, pulling the adhesive article away from a surface to which it is adhered.

For example, U.S. Published Patent Application No. 2009/131792 (Seth et al.) describes exemplary adhesive chemistries useful for transfer tapes and labels, including acrylics, rubbers (e.g., natural rubber and synthetic rubbers such as block copolymers (e.g., styreneisoprene-styrene ("SIS"), styrene-butadiene-styrene ("SBS"), or styrene-ethylene-butadiene-styrene ("SEBS") rubbers)), and the like.

Further examples of useful pressure-sensitive adhesives to include in overcoat layer 140 are described in U.S. Published Patent Application No. 2003/0152767 (Hawkins et al.), including, for example, those based on natural rubbers, synthetic rubbers, styrene block copolymers, polyvinyl ethers, poly(meth)acrylates (including both acrylates and methacrylates), and polyolefins.

In certain embodiments, the pressure-sensitive adhesive can be a polyolefin based pressure-sensitive adhesive, including a poly-α-olefin pressure-sensitive adhesive. The poly-α-olefin comprises one or more monomer units derived from an α-olefin monomer that is a liquid at standard temperature and pressure. The monomer may be a C5 - C30 α-olefin, for example a C6 - C20 α-olefin. When the monomer is a C6 - C12 α-olefin. Such monomers optionally can be substituted with conventional substituents (i.e., those that do not interfere with the polymerization of these monomers or with the desired properties of the polymer produced therefrom). Such an olefin can either be linear or branched (i.e., comprising one or more side chains). Common examples include 1-butene, 1-pentene, 1-hexene, 1-heptene, 1-octene, 1-nonene, 1-decene, 1-undecene, 1-dodecene, 1-hexadecene, 1-octadecene, and 4-methyl- 1-pentene. Specific embodiments utilize α-olefin monomers of 1-hexene or 1-octene. Blends of one or more of these monomers plus a lower (i.e., C2 - C4) 1-alkene are also within the scope of the present disclosure. A description of specific α-olefin polymers can be found in U.S. Pat. No. 5,112,882 (Babu et al.).

Additional description of pressure-sensitive adhesive useful for inclusion in overcoat layer 140 can be found in U.S. Published Patent Application No. 2012/0216953 (Bharti et al.), which describes, for example, a pressure-sensitive adhesive composition that includes at least one polyisobutylene ("PIB") having a first functional group, also referred to as the "functionalized polyisobutylene". The functional group of the functionalized polyisobutylene is typically a group (e.g., a terminal group) that can hydrogen bond or covalently bond to (e.g. pendant carboxylic acid) groups of backbone of an acrylic polymer or a functional group appended to (e.g. the backbone of) the acrylic polymer.

In some embodiments, the functionalized polyisobutylene is a functionalized homopolymer of isobutylene. In other embodiments, the functionalized polyisobutylene is a copolymer comprising isobutylene repeat units and a small amount of units derived from another monomer such as, for example, styrene, isoprene, butene, or butadiene. These copolymers are typically prepared from a monomer mixture that includes at least 70 weight percent, at least 75 weight percent, at least 80 weight percent, at least 85 weight percent, at least 90 weight percent, or at least 95 weight percent isobutylene based on the weight of monomers in the monomer mixture. Typically, at least 70 weight percent, at least 75 weight percent, at least 80 weight percent, at least 85 weight percent, or at least 90 weight percent of the polyisobutylene copolymer is formed from isobutylene repeat units. Exemplary copolymers include isobutylene copolymerized with isoprene.

A pre-adhesive composition comprising acid-functional (meth)acrylate copolymer and an acylaziridine crosslinking agent are described in U.S. Published Patent Application No. 2013/053508 ((Erdogan-Haug et al.), which when cross-linked provide a pressure-sensitive adhesive and pressure-sensitive articles. Examples of monomers suitable for use as a (meth)acrylate ester monomer for formation of the acid-functional (meth)acrylate copolymer can include the esters of either acrylic acid or methacrylic acid with non-tertiary alcohols such as ethanol, 1-propanol, 2-propanol, 1-butanol, 2-butanol, 1-pentanol, 2-pentanol, 3-pentanol, 2-methyl-1-butanol, 3-methyl-1-butanol, 1-hexanol, 2-hexanol, 2-methyl-1-pentanol, 3-methyl-1-pentanol, 2-ethyl-1-butanol, 3,5,5-trimethyl-1-hexanol, 3-heptanol, 1-octanol, 2-octanol, isooctylalcohol, 2-ethyl-1-hexanol, 1-decanol, 2-propylheptanol, 1-dodecanol, 1-tridecanol, 1-tetradecanol, citronellol, dihydrocitronellol, and the like. In some embodiments, the preferred (meth)acrylate ester monomer is the ester of (meth)acrylic acid with butyl alcohol or isooctyl alcohol, or a combination thereof, although combinations of two or more different (meth)acrylate ester monomer are suitable. In some embodiments, the preferred (meth)acrylate ester monomer is the ester of (meth)acrylic acid with an alcohol derived from a renewable source, such as 2-octanol, citronellol, dihydrocitronellol.

Suitable high T_{g} monomers can include, but are not limited to, t-butyl acrylate, methyl methacrylate, ethyl methacrylate, isopropyl methacrylate, n-butyl methacrylate, isobutyl methacrylate, s-butyl methacrylate, t-butyl methacrylate, stearyl methacrylate, phenyl methacrylate, cyclohexyl methacrylate, isobornyl acrylate, isobornyl methacrylate, benzyl methacrylate, 3,3,5 trimethylcyclohexyl acrylate, cyclohexyl acrylate, N-octyl acrylamide, and propyl methacrylate, or a combination thereof.

Useful acid functional monomers for formation of the pre-adhesive composition can include, but are not limited to, those selected from ethylenically unsaturated carboxylic acids, ethylenically unsaturated sulfonic acids, ethylenically unsaturated phosphonic acids, and mixtures thereof. Examples of such compounds include those selected from acrylic acid, methacrylic acid, itaconic acid, fumaric acid, crotonic acid, citraconic acid, maleic acid, oleic acid, beta - carboxyethyl(meth)acrylate, 2-sulfoethyl methacrylate, styrene sulfonic acid, 2-acrylamido-2-methylpropanesulfonic acid, vinylphosphonic acid, and mixtures thereof.

Due to their availability, acid functional monomers of the acid functional copolymer are generally selected from ethylenically unsaturated carboxylic acids (i.e., (meth)acrylic acids). When even stronger acids are desired, acidic monomers include the ethylenically unsaturated sulfonic acids and ethylenically unsaturated phosphonic acids. The acid functional monomer is generally used in amounts of 0.5 to 15 parts by weight, preferably 0.5 to 10 parts by weight, based on 100 parts by weight total monomer.

Representative examples of suitable polar monomers include but are not limited to 2-hydroxyethyl(meth)acrylate; N-vinylpyrrolidone; N-vinylcaprolactam; acrylamide; mono- or di-N-alkyl substituted acrylamide; t-butyl acrylamide; dimethylaminoethyl acrylamide; N-octyl acrylamide; poly(alkoxyalkyl)(meth)acrylates including 2-(2-ethoxyethoxy)ethyl(meth)acrylate, 2-ethoxyethyl(meth)acrylate, 2-methoxyethoxyethyl(meth)acrylate, 2-methoxyethyl methacrylate, polyethylene glycol mono(meth)acrylates; alkyl vinyl ethers, including vinyl methyl ether; and mixtures thereof. Preferred polar monomers include those selected from the group consisting of 2-hydroxyethyl(meth)acrylate and N-vinylpyrrolidinone. The polar monomer may be present in amounts of 0 to 10 parts by weight, preferably 0.5 to 5 parts by weight, based on 100 parts by weight total monomer.

When used, vinyl monomers useful in the (meth)acrylate polymer include vinyl esters (e.g., vinyl acetate and vinyl propionate), styrene, substituted styrene (e.g., alpha -methyl styrene), vinyl halide, and mixtures thereof. As used herein vinyl monomers are exclusive of acid functional monomers, acrylate ester monomers and polar monomers. Such vinyl monomers are generally used at 0 to 5 parts by weight, preferably 1 to 5 parts by weight, based on 100 parts by weight total monomer.

Further description of pressure-sensitive adhesives useful for inclusion in overcoat layer 140 can be found in EP 2479231 (Srivatsan et al.), including, for example, rubber-acrylic hybrid polymers having an acrylic polymer backbone grafted with hydrocarbon macromers and further including hydrocarbon oligomers and/or hydrocarbon polymers. Hydrocarbon macromers that can be used include, but are not limited to, olefinic hydrocarbons such as ethylene-butylene macromers, ethylene-propylene macromers ethylene-butylene-propylene macromers, and isobutylene macromers, and can range in molecular weight from about 2,000 to about 30,000. Specific, commercially available examples of a hydrocarbon macromer that can be used is "L-1253", a fully hydrogenated ethylene-butylene macromer with a molecular weight of approximately 6000 that is manufactured by Kuraray Co., Ltd. of Tokyo, JP. Other non-olefinic macromers that can form a separate phase from the acrylic backbone also can be incorporated into the adhesive polymer, and include, but are not limited to, poly methyl methacrylate ("PMMA") available from Lucite International Ltd. of Southampton, UK; polystyrene ("PS") available from Bimax, Polymer Chemistry Innovations Inc. of Tucson, AZ; poly dimethylsiloxane ("PDMS"); poly ethyleneoxide ("PEOX"); and poly propyleneoxide ("PPOX"). Those macromers also can be added as an additional phase to the hydrocarbon macromers.

Typical rubber-acrylic hybrid polymers can be copolymers containing one or more of typical acrylic monomers such as 2-ethylhexyl acrylate ("EHA"), methyl acrylate ("MA"), butyl acrylate ("BA"), acrylic acid ("AA"), 2-hydroxyethylacrylate ("HEA"), etc. and rubber macromers. Workable compositions include EHA/HEA/L1253, EHA/AA/L1253, EHA/MA/HEA/L1253, BA/AA/L1253, EHA/MA/AA/L1253, BA/HEA/L1253, BA/MA/HEA/L1253, EHA/NVP (N-vinyl pyrrolidone)/AA/L1253, and BA/MA/AA/L1253. "KRATON L1253" is a polyethylene/butylene methacrylate available from Kraton Polymers LLC of Houston, Texas. Such polymers can be suitable for energy/radiation induced crosslinking by the addition of energy/radiation sensitive/reactive monomers but, as the skilled person will recognize, if high-energy electrons are used for crosslinking, the rubber-acrylic hybrid polymer need not necessarily contain any energy/radiation sensitive monomers as the possible compositions listed above may be suitable in and of themselves.

Hydrocarbon compounds that can be used in accordance with the invention include, but are not limited to, oligomers and hydrocarbon polymers. Such hydrocarbon compounds can be any preferably fully hydrogenated (but can range in hydrogenation from 0% to 100%) polymer compatible with the hydrocarbon macromers and preferably having a molecular weight of 1,000 or higher. In additional embodiments, hydrocarbon oligomers and hydrocarbon polymers that can be used to add to the hydrocarbon phase of the PSA can be crystalline in nature, and/or further contain reactive sites. The reaction sites can consist of, but are not limited to, carboxylic acid, hydroxyl, anhydride, aldehyde, ketone, acetate, amine, amide, aziridine, epoxide, mercapto, (meth)acrylate, vinyl, and mixtures thereof. Illustrative, non-limiting examples of such hydrocarbon oligomers and hydrocarbon polymers include, but are not limited to, ethylene, propylene, butadiene, isoprene, isobutylene, hexene, octene, the like, and mixtures thereof.

Commercially available examples of hydrocarbon compounds include oligomers and hydrocarbon polymers, such as "LIR-200" and "LIR-290" manufactured by Kuraray Co., Ltd., and UC203, a methacrylic functionlized liquid isoprene rubber that can be UV light or peroxide cured, also available from Kuraray Co., Ltd.; "EXXELOR VA1201", "EXXELOR VA1202", "EXXELOR VA1801", "EXXELOR VA1803", "EXXELOR VA1840", "EXXELOR VA1850" (maleic anhydride functionalized elastomeric ethylene copolymers), "EXXELOR PO 1015", "EXXELOR PO 1020" (maleic anhydride functionalized polypropylenes), and "EXXELOR PE 1040" (maleic anhydride functionalized polyethylenes) all available from ExxonMobil Chemical Corporation of Irving, TX; "KRATON D" series such as "KRATON D-1101K" (SBS) and "KRATON D-1107" (SIS), "KRATON G series", for example, "KRATON G-1657M" (SEBS) and "KRATON G-1730M" (SEPS), "KRATON FG" series such as "KRATON FG-1901", "KRATON IR", for example, "KRATON IR-305 (IR)" available from Kraton Polymers LLC of Houston, TX; and "POLY BD" series such as "POLY BD 45 CT" (carboxyl-terminated polybutadiene), "POLY BD 600E" (epoxidized hydroxyl terminated polybutadiene resin), "POLY BD R4HTLO" (hydroxy terminated polybutadiene resin), "POLY BD LF-2" (hydroxyl terminated 1, 3-butadiene homopolymer), "POLY BD R45VT" (vinyl functional polybutadiene) available from Sartomer Company, Inc. of Exton, PA.

Such rubber-acrylic hybrid polymers can be made by copolymerizing the hydrocarbon monomers such as alkyl acrylate ester monomers in the presence of a macromer containing a reactive acrylic or methacrylic end group and adding selected hydrocarbon compounds having a molecular weight of at least 1,000. Alternatively, an acrylic backbone can be produced with pendant functional groups capable of reacting with the end group of a macromer not having an acrylic or (meth)acrylic group, for instance, an acrylic backbone with anhydride groups and an ethylene butylene monool containing one terminal hydroxyl group. These additional hydrocarbon compounds may be added via any one of several methods that are known in the art, examples of which include, but are not limited to, solvent blending, hot-melt extrusion, reactive extrusion, or polymerizing in the presence of the additional hydrocarbon compounds.

It must be understood that the present disclosure is in no way limited by the method utilized to prepare the PSA, and any and all practicable processes, including but not limited to solvent polymerization, bulk flow through an extruder, syrup polymerization, and on-web energy curing, are contemplated as within the scope of this invention. It is understood that the skilled reader will encounter no difficulty or need for undue experimentation to prepare pressure-sensitive adhesives within the ranges and bounds disclosed herein.

The total weight percent of the hydrocarbons (monomers, oligomers, and polymers) in the pressure-sensitive adhesives contemplated herein will preferably range from about 5% to about 75%. In one embodiment, the ratio of hydrocarbon monomer to hydrocarbon oligomers and polymers will preferably range from 1:100 to 100:1.

The acrylic monomer system used to make the acrylic background can be based solely on acrylate ester monomers, but also can be modified by inclusion of polar monomers. The acrylic-based backbone polymers are formed in the presence of the reactive hydrogenated macromer provided in a weight of about 5 to about 50, but preferably 10 to 30, and more preferably 15 to 25 percent by weight of the monomers forming the acrylic backbone and the macromer. The acrylic polymers that are used to form the backbone of the instant invention are preferably acrylic ester/acrylic acid copolymers, but can be formed from a variety of other monomers.

The acrylic-based backbone polymers to which the hydrocarbon macromer is grafted can contain from about 35 to about 100 weight percent of the total acrylate backbone of one or more alkyl acrylate esters containing about 4 to about 8 carbon atoms in the alkyl group. Useful alkyl acrylate esters include n-butyl acrylate, 2-ethyl hexyl acrylate, isooctyl acrylate, and the like, with 2-ethyl hexyl acrylate being preferred.

A modifying monomeric component that also can be added includes one or more vinyl esters that can be present in a total amount of up to about 35 weight percent, based on total weight of the monomers forming the acrylate polymer backbone. Representatives of the vinyl esters that can be used include vinyl acetate, vinyl butyrate, vinyl propionate, vinyl isobutyrate, vinyl valerate, vinyl versitate, and the like.

Further modifying components of the acrylic backbone polymer that can be used are one or more diesters of a dicarboxylic acid and mixtures thereof, present in a total amount of up to about 35 weight percent based on the total weight of the monomers. Each ester group of the diester of the dicarboxylic acid independently contains from about 8 to about 16, and preferably from about 8 to about 12, carbon atoms. Preferred diesters include di-2-ethyl hexyl maleate, di-3-ethyl hexyl fumarate and mixtures thereof.

Yet other modifying components and preferably used monomers are one or more unsaturated carboxylic acids containing from about 3 to about 5 carbon atoms and present in a total amount of up to about 10 weight percent of the polymer, but preferably from about 5 to about 10 weight percent. Such unsaturated carboxylic acids include, among others, acrylic acid, methacrylic acid, itaconic acid, and the like, and mixtures thereof.

Other co-monomers such as methyl acrylate, methyl methacrylate, styrene and the like also can be used to modify the Tg of the acrylic copolymer. Polar comonomers such as N-vinyl pyrrolidone, N-vinyl caprolactam, hydroxyethyl(propyl) (meth)acrylate, acetoacetoxyethyl methacrylate, etc. can be used to further enhance adhesion to various surfaces. Other comonomers such as glycidyl methacrylate or allyl glycidyl ether can be used to further enhance high-temperature shear properties. Presently preferred acrylic backbone polymers are copolymers of 2-ethyl hexyl acrylate present in an amount of from about 95 percent to about 90 weight percent, and acrylic acid present in an amount of from about 5 to about 10 weight percent.

The pressure sensitive adhesives disclosed herein may further be subjected to crosslinking, which can be achieved through chemical means or energy/radiation curing. The choice of a chemical crosslinker depends on the chemical nature of the crosslinkable moiety introduced into the acrylic segment of the rubber-acrylic hybrid polymer. Exemplary chemical crosslinkers that can be employed include di-, tri-, or poly-isocyanates (such as "PAPI" or "VORONATE" available from Dow Chemical Company of Midland, MI) with or without a catalyst (such as dibutyltin dilaureate); ionic crosslinkers (such as "TYZOR GBA" available from E.I. du Pont de Nemours & Co., Inc. of Wilmington, DE), or "AAA" available from NOAH Technologies of San Antonio, TX); di-, tri-, or poly-isocyanates (PAPI or VORONATE for example) with or without a catalyst (such as dibutyltin dilaureate); and di-, tri-, or poly-functional aziridines (such as "DYNAMAR HX-752" offered by 3M Company). The first three crosslinkers are believed to be most suitable if HEA is used as the crosslinkable acrylic moiety, and all crosslinkers can be used when AA is used as the crosslinkable acrylic moiety. Other novel chemical crosslinkers can be employed as well where the hydrocarbon macromer and the hydrocarbon oligomers and/or polymers of the PSA can be crosslinked. Illustrative, non-limiting examples of commercially available chemical crosslinkers include AAA TYZOR, XAMA available from Bayer of Pittsburgh, PA, and PAPI and VORONATE, available from Dow Chemical Company, Midland, MI.

Energy/radiation induced crosslinking presents a versatile and attractive alternative to the aforementioned chemical crosslinking processes, particularly in situations where the PSA is coated as a hot melt. Suitable energy/radiation include application of ultravioliet ("UV") light and high-energy electrons ("EB"). When applying UV light, the rubber-acrylic hybrid polymer must preferably include, i.e., be copolymerized with, UV sensitive/reactive moieties. These moieties can be present to the extent of 0.1%-10% by weight of the total monomer content. The PSA can contain multi-functional monomers such as hexanediol diacrylate, etc., to facilitate crosslinking. These multi-functional monomers can be present to the extent of 0% - 5% by weight of the composition.

When applying EB for crosslinking, the rubber-acrylic hybrid polymer can include (i.e., be copolymerized with) EB sensitive/reactive moieties. These moieties can be present to the extent of 0.1%-10% by weight of the total monomer content. The PSA can contain multi-functional monomers such as hexanediol diacrylate, etc., to facilitate crosslinking. These multi-functional monomers can be present to the extent of 0%-5% by weight of the composition. The EB crosslinkable compositions do not need to include either the copolymerized EB sensitive moiety nor the multifunctional crosslinking agents.

In further embodiments, the macromer portion of the graft copolymer can be tackified using preferably tackifiers that are compatible with the hydrocarbon phase and incompatible with the acrylic phase of the compound. Preferably the tackifiers used are substantially fully saturated tackifiers. Specific tackifiers that can be employed can include, but are not limited to, hydrogenated styrene-based resins such as "REGALREZ" resins designated as "1018", "1033", "1065", "1078", "1094" and "1126" manufactured and sold by Hercules, Inc. of Wilmington, DE; "REGALRE 6108", a 60% hydrogenated aromatic resin also manufactured by Hercules; hydrogenated C5 and/or C9 hydrocarbon resin feed stocks such as "ARKON" resins "P-70", "P-90", "P-100", "P-115", "M-90", "M-100", "M-110" and "M-120" manufactured and sold by Arakawa Chemical Industries, Ltd of Osaka,JP, and "REGALITE" resins "R-100", "R-1125", "MGB-63", "MGB-67", and "MGB-70" manufactured and sold by Hercules, Inc.; hydrogenated polycyclo-pentadienes such as "ESCOREZ" resins "5320", "5300", "5380" and "5400" manufactured and sold by ExxonMobil Chemical Corporation of Irving, TX; hydrogenated polyterpene and other naturally occurring resins such as "CLEARON" resins "P-105", "P-115", "P-125", "M-105", and "M-115" manufactured and sold by Yasuhara Yushi Kogyo Co. Ltd. of Hiroshima, JP, and "EASTOTACK" resins "H-100", "H-100W", "H-115", and "H-130" and the like manufactured and sold by Eastman Chemical Company of Kingsport, TNe; and "KAYDOL" hydrogenated mineral oil manufactured and sold by Witco Chemical Corp. of Cranford, NJ, and the like. The pressure-sensitive adhesive compounds disclosed herein can contain between 5% and 50% by weight tackifiers.

Commercially available poly(meth)acrylates useful for overcoat layer 140 can include, for example, that acrylic resin available from Lucite International, Cordova, TN, under the trade designation "ELVACITE 1010".

As one of ordinary skill recognizes, other hydrocarbon polymers not specifically listed above may be available for providing overcoat layer 140. As such, the above listings of hydrocarbon polymers should not be considered limiting, but merely indicative of the wide variety of commercially available products that can be utilized.

An example of a commercially available hardcoat composition useful for overcoat layer 140 can include "3M 906 ABRASION RESISTANT COATING" available from 3M Company, Saint Paul, MN. In one formulation, 3M's 906 hardcoat is a 33 wt.% solids ceramer hardcoat dispersion containing 32 wt.% 20 nm SiO₂ nano-particles, 8 wt.% N,N-dimethyl acrylamid, 8 wt.% methacryloxypropyl trimethoxysilane and 52 wt.% pentaerythritol tri/tetra acrylate (PETA) in IPA.

Suitable copolymers and blends of the above organic polymers (i.e., fluoropolymers, silicones, and hydrocarbon polymers) can also be used.

Overcoat layer 140 typically has a thickness in the range of from 0.01 to 100 micrometers, from 0.01 to 10 micrometers, from 0.01 to 3 micrometers, or even 0.01 to 1 micrometer, although this is not a requirement.

The second coating composition can be applied over the antistatic layer 130, usually as a solution or suspension in an organic solvent, or as an aqueous latex. Any suitable method can be used for application of the overcoat layer. Suitable methods for applying the second coating composition can include, for example, roll coating, spray coating, gravure coating, dip coating, and curtain coating.

Various methods for at least partially curing an applied layer of second coating composition can include those various radiation and/or thermal methods well known in the art, including, for example, UV irradiation and/or e-beam irradiation. In some embodiments, the layer of second coating composition can be at least partially dried in order to form overcoat layer 140. In some embodiments a combination of at least partially drying and radiation curing can be used, depending on the composition selected for the second coating composition.

It will be appreciated that antistatic coating 120 can also be formed by laminating a film layer (i.e., an overcoat layer "film") onto antistatic layer 130 to form antistatic coating layer 120, where the film layer comprises an organic polymer selected from among the fluoropolymer, silicone, and hydrocarbon polymer materials described above. Suitable lamination conditions can be selected among those well known in the art (e.g., using suitable combinations of heat and/or pressure to effect the lamination), depending on the choice of materials in the film.

While the antistatic coating 120 of article 100 of the present disclosure can have an average surface resistivity of less than or equal to 10¹² ohms per square ("Ω/square") at 25 °C and 50 percent relative humidity, in some embodiments, it may have a surface resistivity of less than or equal to 10¹¹ ohms per square, less than or equal to 10¹⁰, less than or equal to 10⁹, less than or equal to 10⁸, or even less than or equal to 4 x 10⁷ ohms per square. Average surface resistivity can be determined according to ASTM D-257-07 "Standard Test Methods for DC Resistance or Conductance of Insulating Materials".

While the antistatic coating 120 of article 100 of the present disclosure can have a static decay time (see the Example section for a description of STATIC DECAY TIME TESTING PROTOCOL) at 20 percent relative humidity and a temperature of about 25 °C of less than or equal to 15 seconds, less than or equal to 5 seconds, less than or equal to 1 second, less than or equal to 0.5 second, less than or equal to 0.2 second, or even less than or equal to 0.1 second.

Examples of suitable substrates include virtually any dimensionally-stable material. Examples include glass substrates (e.g., mirrors, windows, windshields, tables, lenses, and prisms), metal substrates, ceramic substrates, organic polymer substrates (e.g., molded polymer articles, automotive paints and clearcoats, polymer films, retroreflective sheeting, indoor signage, and outdoor signage), and fabric (e.g., upholstery fabric). In some embodiments, the substrate comprises at least one of glass or an organic polymer. In some embodiments, the organic polymer comprises at least one of cellulose acetate, polyester (e.g., polyethylene terephthalate or polybutylene terephthalate), polycarbonate, allyldiglycol carbonate, acrylics (e.g., polymethyl methacrylate (PMMA)), polystyrene, polysulfone, polyether sulfone, homo-epoxy polymers, epoxy addition polymers with polydiamines and/or polydithiols, polyamides (e.g., nylon 6 and nylon 6,6), polyimides, polyolefins (e.g., polyethylene and polypropylene), olefinic copolymers (e.g., polyethylene copolymers), and cellulose esters (e.g., cellulose acetate and cellulose butyrate), and combinations thereof.

In some embodiments, an antistatic article according to the present disclosure (i.e., an article 100 including an antistatic layer 120 disposed on a substrate 110) can be transparent, durable, and exhibit unexpectedly good antistatic properties. In some embodiments, the overcoat layer is a protective overcoat layer.

Surprisingly the aqueous nanosilica/clay composition of the present disclosure is readily coated on many hydrophobic surfaces. However, for some hydrophobic substrates, in order to uniformly coat the composition onto such a hydrophobic substrate from an aqueous system, and even more importantly, to enhance the interfacial adhesion of the antistatic layer to substrate layer, it may be desirable to increase the surface energy of the substrate layer and/or reduce the surface tension of the nanosilica/clay coating composition. The surface energy may be increased by oxidizing the substrate surface prior to coating using corona discharge or flame treatment methods. These methods may also improve adhesion of the antistatic layer to the substrate layer. Other methods capable of increasing the surface energy of the substrate layer include the use of primers such as thin coatings of polyvinylidene chloride (PVDC). Alternatively, the surface tension of the nanosilica/clay coating composition may be decreased by addition of lower alcohols (C1 to C8). In certain special instances in order to improve the coating hydrophilicity, and/or to ensure uniform coating of the nanosilica/clay from an aqueous or hydroalcoholic solution, it may be beneficial to add a wetting agent, which is typically a surfactant, provided that the selected surfactant is not an organic polymer.

### SELECT EMBODIMENTS OF THE PRESENT DISCLOSURE

The present disclosure provides the following items as select embodiments:
Item 1. A method of forming a multilayer antistatic coating on a substrate, the method comprising:
   a) providing a first coating composition comprising:
      an aqueous media;
      silica nanoparticles dispersed in the aqueous media, wherein the silica nanoparticles have an average particle size in a longest dimension of up to 100 nm; and
      clay particles dispersed in the aqueous media, wherein the clay particles have an average particle size in the longest dimension in a range from 20 nm to 1000 nm;
      wherein a weight ratio of the clay particles to the silica nanoparticles is in a range from 0.01 to 1, and wherein the first coating composition has a pH of less than or equal to 4;
   b) contacting the first coating composition with a surface of a substrate;
   c) at least partially drying the first coating composition to form a layer of an antistatic composition on the surface of the substrate, the antistatic composition comprising an amorphous matrix of the silica nanoparticles and clay particles dispersed in the amorphous matrix; and
   d) providing an overcoat layer disposed on the layer of the antistatic composition, thereby forming the multilayer antistatic coating on the substrate.
Item 2. The method of item 1, wherein providing the overcoat layer comprises coating a second coating composition onto the layer of the antistatic composition, and at least partially curing and/or at least partially drying the second coating composition, wherein the second coating composition comprises an organic polymer comprising a fluoropolymer, a silicone, a hydrocarbon polymer, copolymer thereof, or blend thereof.
Item 3. The method of item 1 or item 2, wherein providing the overcoat layer comprises laminating an overcoat film onto the layer of the antistatic composition, wherein the overcoat film comprises an organic polymer comprising a fluoropolymer, a silicone, a hydrocarbon polymer, copolymer thereof, or blend thereof.
Item 4. The method of any one of items 1 to 3, wherein the first coating composition is essentially free of organic polymer.
Item 5. The method of any one of items 1 to 4, wherein the clay is a smectite clay.
Item 6. The method of any one of items 1 to 5, wherein the clay is a montmorillonite clay.
Item 7. The method of any one of items 1 to 6, wherein the total amount of solids in the first coating composition is in a range from 1 weight percent to 50 weight percent of a total weight of the first coating composition.
Item 8. The method any one of items 1 to 7, wherein the substrate comprises glass or an organic polymer.
Item 9. The method of item 8, wherein the organic polymer comprises any of cellulose acetate, polyethylene terephthalate, polycarbonate, poly(methyl methacrylate), polyurethane, polyethylene, polypropylene, copolymers of polyethylene and polypropylene, or combinations thereof.
Item 10. The method of item 8, wherein the organic polymer is polyethylene terephthalate.
Item 11. The method of any one of items 1 to 10, wherein the multilayer antistatic coating is substantially light transmissive.
Item 12. The method of any one of items 1 to 11, wherein the multilayer antistatic coating has an average surface resistivity of less than or equal to 10¹² ohms per square at 25 °C and at 50 percent relative humidity.
Item 13. The method of any one of items 1 to 12, wherein the multilayer antistatic coating has a static decay time at 25 °C and 20% relative humidity of less than or equal to 2 seconds.
Item 14. The method of any one of items 1 to 13, wherein providing the first coating composition having a pH of less than or equal to 4 comprises providing an initial silica sol having a pH greater than 6 and acidifying the initial silica sol by addition of inorganic acid.
Item 15. The method of item 14, wherein the inorganic acid comprises hydrochloric acid, nitric acid, sulfuric acid, phosphoric acid, perchloric acid, or chloric acid.
Item 16. An article comprising a coated substrate provided with a multilayer antistatic coating according to the method of any one of items 1 to 15.
Item 17. An article comprising a substrate having a multilayer antistatic coating disposed thereon, the antistatic coating comprising a layer of an antistatic composition disposed on a major surface of the substrate, and an overcoat layer disposed on a major surface of the antistatic layer;
   wherein the antistatic composition comprises:
   an amorphous matrix of silica nanoparticles having an average particle size of up to 100 nm in a longest dimension; and
   clay particles dispersed in the amorphous matrix of silica nanoparticles, the clay particles having an average particle size in the longest dimension in a range from 20 nm to 1000 nm; and
   wherein the overcoat layer comprises a fluoropolymer, a silicone, a hydrocarbon polymer, copolymer thereof, or blend thereof.
Item 18. The article of item 17, wherein the layer of the antistatic composition is essentially free of organic polymer.
Item 19. The article of item 17 or item 18, wherein the clay is a smectite clay.
Item 20. The article of any one of items 17 to 19, wherein the clay is a montmorillonite clay.
Item 21. The article of any one of items 17 to 20, wherein the clay particles have an average particle size in longest dimension in a range from 100 nm to 1000 nm.
Item 22. The article of any one of items 17 to 21, wherein the silica nanoparticles have an average particle size of up to 25 nm in a longest dimension.
Item 23. The article of any one of items 17 to 22, wherein an amount of the clay particles in the multilayer antistatic composition comprises up to 50 percent by weight of the clay particles, based on a total weight of the antistatic composition.
Item 24. The article of any one of items 17 to 23, wherein the multilayer antistatic coating has an average surface resistivity of less than or equal to 10¹² ohms per square at 25 °C and at 50 percent relative humidity.
Item 25. The article of any one of items 17 to 24, wherein the multilayer antistatic coating has a static decay time at 25 C and 20% relative humidity of less than or equal to 2 seconds.

### EXAMPLES

Unless otherwise noted, all parts, percentages, ratios, etc. in the Examples and the rest of the specification are by weight. "Weight percent" is in some places abbreviated as "wt%".

### Materials

Methyl ethyl ketone (MEK) and hydrochloric acid (HCl) were purchased from J.T. Baker, Phillipsburg, NJ. Nitric acid (HNO₃) was purchased from VWR, West Chester, PA. Ethyl acetate was obtained from EMD Millipore, Darmstadt, Germany. Other materials are listed in Table 1.

**TABLE 1**

| | |
|---|---|
| Cloisite Na⁺ | a montmorillonite clay obtained from Southern Clay Products, Inc., Gonzales, TX, under the trade designation "CLOISITE NA⁺" |
| ELVACITE 1010 | acrylic resin, obtained from Lucite International, Cordova, TN, under the trade designation "ELVACITE 1010" |
| MCBP | refined bentonite clay obtained from Southern Clay Products, Inc., Gonzales, TX, under the trade designation "MINERAL COLLOID BP" |
| NALCO 1115 | colloidal dispersion of silica nanoparticles (average particle size 4 nm diameter), 16.3 weight percent in water, obtained from Nalco Company, Naperville, IL, under the trade designation "NALCO 1115" |
| NALCO 2329 | colloidal dispersion of silica nanoparticles (average particle size 75 nm diameter), 40 weight percent in water, obtained from Nalco Company, Naperville, IL, under the trade designation "NALCO 2329" |
| PET | 2 mil (51 micrometer) polyethylene terephthalate film, obtained from 3M Company, St. Paul, MN. |
| PERMA-NEW 6000 | a scratch resistant coating consisting of a thermally cured nano-silica siloxane, obtained from California Hard Coating Co., Chula Vista, CA, under the trade designation "PERMA-NEW 6000" |
| THV200 | a polymer of tetrafluoroethylene, hexafluoropropylene and vinylidene fluoride, obtained from Dyneon LLC, Saint Paul, MN, under the trade designation "THV200" |

### TEST METHOD FOR EVALUATING THE SURFACE RESISTIVITY

The samples prepared according to the Examples and Comparative Examples described below were evaluated for their surface resistivity using a surface resistivity meter (obtained from Monroe Electronics, Inc., Lyndonville, NY, under the trade designation "272A PORTABLE SURFACE RESISTIVITY METER") according to ASTM D-257-07, "Standard Test Methods for DC Resistance or Conductance of Insulating Materials". The surface resistivity was measured at an applied voltage of 100 V DC using a guarded ring-type electrode system (obtained from Monroe Electronics, Inc., under the trade designation "MONROE MODEL 96101A-1 GUARDED-RING-TYPE ELECTRODE"). Coatings were stored in either (1) ambient conditions (<20 relative humidity ("RH")), or (2) in a controlled temperature and humidity room at 23 °C and 50% RH overnight before measuring surface resistivity (see Tables 3 to 6 below). The upper limit of surface resistivity measurable by the instrument was 10¹⁴ ohms per square ("Ω/□"). If the surface resistivity of a coating exceeded this value, a value of >10¹⁴ Ω/□ was recorded. Average surface resistivity was determined as an average of three collected data points.

### STATIC DECAY TIME TESTING PROTOCOL

A static decay meter (obtained from Electro-Tech Systems, Inc., Arlington, TX, under the trade designation "MODEL 406C STATIC DECAY METER") was used to measure static decay times. Film samples approximately 5 inches (about 13 cm) on a side were cut and mounted between the meter electrodes using magnets. Positively and negatively biased potentials of 5 kV were applied separately to each test sample, and the times required for the accumulated static charges to decay to 10% of their initial values were measured, up to a maximum of 60 sec. These times are reported as the Static Decay Times (indicated as either positively or negatively biased potentials). The data were acquired at approximately 25 °C and a relative humidity below 20%.

### PREPARATION OF COATING MIXTURES

Aqueous mixtures of the montmorillonite clays were prepared by: (i) adding approximately 2 weight percent of clay powder to deionized water and stirring for 48 hours; (ii) stopping the agitation and allowing the mixtures to settle overnight; (iii) pouring off the supernatant and discarding the solid material that had settled at the bottom of the jar (typically ∼10% of the total amount of clay).

Coating dispersions of clay/nanosilica were prepared in deionized water, using the clay:nanosilica weight ratios and percent solids levels indicated for each of the samples in Table 2. The pH of the coating dispersions was adjusted to pH = 2 via dropwise addition of either 1M HCl or 1 M HNO₃ (the acid type is indicated in Table 2 below).

The ELVACITE 1010 coating solution was prepared by dissolving 25 weight percent of the ELVACITE 1010 resin in ethyl acetate.

The THV200 coating solution was prepared by dissolving 10 weight percent of the resin in MEK.

Coating formulations for the antistatic ("A") and overcoat ("OC") layers are shown in Table 2:

**TABLE 2**

| Sample | Coating Formulation | Mayer Rod used for Coating |
|---|---|---|
| A-0 | Nalco2329/Nalco1115 (70:30 ratio) 10 wt% solids in water, pH 2 (HNO₃) | #13 |
| A-1 | Nalco 1115/CloisiteNa (98:2 ratio) 10 wt% solids in water, pH 2 (HNO₃) | #13 |
| A-2 | Nalco 1115/CloisiteNa (95:5 ratio) 10 wt% solids in water, pH 2 (HNO₃) | #13 |
| A-3 | Nalco 1115/MCBP (90:10 ratio) 5 wt% solids in water, pH 2 (HNO₃) | #25 |
| A-4 | Nalco 1115/CloisiteNa (85:15 ratio) 5 wt% solids in water, pH 2 (HNO₃) | #25 |
| A-5 | Nalco 1115/CloisiteNa (75:25 ratio) 5 wt% solids in water, pH 2 (HNO₃) | #19 |
| A-6 | Nalco 1115/CloisiteNa (75:25 ratio) 5 wt% solids in water, pH 2 (HNO₃) | #25 |
| A-7 | Nalco 1115/CloisiteNa (75:25 ratio) 5 wt% solids in water, pH 2 (HCl) | #13 |
| A-8 | Nalco 1115/CloisiteNa (50:50 ratio) 5 wt% solids in water, pH 2 (HCl) | #13 |
| OC-1 | THV 200 fluoropolymer, 10 wt% solids in MEK | #22 |
| OC-2 | ELVACITE 1010 acrylic resin, 25 wt% solids in ethyl acetate | #13 |
| OC-3 | PERMA-NEW 6000 silicone, 28 wt% solids | #13 |

The coating formulation for antistatic composition A-0 did not include clay particles.

### COATING PROCEDURES

For antistatic ("A") layers: Mayer Rods #13, #19, or #25 (obtained from RD Specialties, Inc., Webster, NY) corresponding to wet film thicknesses of approximately 29.7, 48.7, and 57.2 micrometers, respectively, were used to coat the antistatic clay/nanosilica mixtures indicated in Table 2 onto PET film. All of the PET samples coated with the silica/clay "A" coating formulations were allowed to air dry for 3 to 5 minutes, and were then were placed in a 150 °C oven for 10 minutes. Microscope slides were placed on top of the edges of the coated substrates during heating.

For overcoat ("OC") layers: Mayer Rods #13 or 22 (RD Specialties, Inc.) corresponding to wet film thicknesses of approximately 29.7 and 50.3 micrometers, respectively, were used to apply the overcoat formulations OC-1, OC-2, and OC-3 (see Table 2) onto the PET film coated with the indicated "A" layer, to provide the examples of multilayer antistatic layers and related comparative examples listed in Tables 3 to 6. Microscope slides were placed on top of the coated substrates during a 15 minute thermal treatment at 150 °C.

Several comparative examples having only an antistatic layer and no overcoat layer are listed in Table 3, along with the measured surface resistivity and static decay time data.

**TABLE 3**

| Sample | Antistatic Layer Composition | Overcoat Layer Composition | Surface Resistivity at <20% RH, Ω/□ | Surface Resistivity at 50% RH, Ω/□ | (+) Static Decay Time at <20% RH, seconds | (-) Static Decay Time at <20% RH, seconds |
|---|---|---|---|---|---|---|
| CE-0 | A-0 | None | 9.2 x 10⁹ | 1.3 x 10⁸ | 0.01 | 0.01 |
| CE-1 | A-1 | None | 5.7 x 10⁹ | 9.3 x 10⁸ | 0.02 | 0.02 |
| CE-2 | A-2 | None | 1.4 x 10⁸ | 2.5 x 10⁷ | 0.01 | 0.01 |
| CE-3 | A-3 | None | 4.8 x 10⁶ | 1.6 x 10⁶ | 0.01 | 0.00 |
| CE-4 | A-4 | None | 6.2 x 10⁶ | 1.1 x 10⁶ | 0.01 | 0.01 |
| CE-5 | A-5 | None | 1.1 x 10⁷ | 1.4 x 10⁶ | 0.01 | 0.00 |
| CE-6 | A-6 | None | 7.8 x 10⁶ | 1.2 x 10⁶ | 0.00 | 0.00 |
| CE-7 | A-7 | None | 6.7 x 10⁶ | 2.3 x 10⁶ | 0.00 | 0.01 |
| CE-8 | A-8 | None | 1.2 x 10⁷ | 4.6 x 10⁶ | 0.00 | 0.00 |

Examples having a multilayer antistatic layer including the indicated antistatic layer and a fluoropolymer (THV 200) overcoat layer are listed in Table 4, along with the measured surface resistivity and static decay time data.

**TABLE 4**

| Sample | Antistatic Layer Composition | Overcoat Layer Composition | Surface Resistivity at <20% RH, Ω/□ | Surface Resistivity at 50% RH, Ω/□ | (+) Static Decay Time at <20% RH, seconds | (-) Static Decay Time at <20% RH, seconds |
|---|---|---|---|---|---|---|
| CE-9 | A-0 | OC-1 | > 10¹⁴ | 7.4 x 10¹⁰ | > 60 | > 60 |
| EX-1 | A-1 | OC-1 | > 10¹⁴ | 5.0 x 10¹⁰ | 3.64 | 3.25 |
| EX-2 | A-2 | OC-1 | 4.4 x 10¹¹ | 1.3 x 10¹⁰ | 0.10 | 0.10 |
| EX-3 | A-3 | OC-1 | 4.5 x 10¹¹ | 5.7 x 10⁸ | 0.02 | 0.01 |
| EX-4 | A-4 | OC-1 | 1.1 x 10¹¹ | 7.9 x 10⁷ | 0.01 | 0.00 |
| EX-5 | A-5 | OC-1 | 1.8 x 10¹⁰ | 4.3 x 10⁷ | 0.01 | 0.00 |
| EX-6 | A-6 | OC-1 | 5.6 x 10¹⁰ | 6.5 x 10⁷ | 0.01 | 0.01 |
| EX-7 | A-7 | OC-1 | 8.2 x 10¹⁰ | 1.5 x 10⁹ | 0.02 | 0.03 |
| EX-8 | A-8 | OC-1 | 2.4 x 10¹⁰ | 3.1 x 10⁸ | 0.00 | 0.00 |

Examples having a multilayer antistatic layer including the indicated antistatic layer and a poly(meth)acrylate (ELVACITE 1010) overcoat layer are listed in Table 5, along with the measured surface resistivity and static decay time data.

**TABLE 5**

| Sample | Antistatic Layer Composition | Overcoat Layer Composition | Surface Resistivity at <20% RH, Ω/□ | Surface Resistivity at 50% RH, Ω/□ | (+) Static Decay Time at <20% RH, seconds | (-) Static Decay Time at <20% RH, seconds |
|---|---|---|---|---|---|---|
| CE-10 | A-0 | OC-2 | > 10¹⁴ | > 10¹⁴ | > 60 | > 60 |
| EX-9 | A-1 | OC-2 | > 10¹⁴ | 1.5 x 10¹² | 11.96 | 13.88 |
| EX-10 | A-2 | OC-2 | > 10¹⁴ | 1.0 x 10⁹ | 4.42 | 4.10 |
| EX-11 | A-3 | OC-2 | 6.1 x 10¹¹ | 5.6 x 10⁸ | 0.08 | 0.09 |
| EX-12 | A-4 | OC-2 | 4.9 x 10¹² | 1.6 x 10⁹ | 0.12 | 0.12 |
| EX-13 | A-5 | OC-2 | 2.4 x 10¹² | 1.1 x 10¹⁰ | 0.06 | 0.06 |
| EX-14 | A-6 | OC-2 | 1.5 x 10¹² | 1.1 x 10⁹ | 0.01 | 0.02 |
| EX-15 | A-7 | OC-2 | 3.0 x 10¹² | 7.1 x 10¹⁰ | 0.06 | 0.09 |
| EX-16 | A-8 | OC-2 | 4.7 x 10¹² | 1.4 x 10¹¹ | 0.12 | 0.12 |

Examples having a multilayer antistatic layer including the indicated antistatic layer and a silicone (PERMA-NEW 6000) overcoat layer are listed in Table 6, along with the measured surface resistivity and static decay time data.

**TABLE 6**

| Sample | Antistatic Layer Composition | Overcoat Layer Composition | Surface Resistivity at <20% RH, Ω/□ | Surface Resistivity at 50% RH, Ω/□ | (+) Static Decay Time at <20% RH, seconds | (-) Static Decay Time at <20% RH, seconds |
|---|---|---|---|---|---|---|
| CE-11 | A-0 | OC-3 | > 10¹⁴ | 4.3 x 10¹² | > 60 | > 60 |
| EX-17 | A-1 | OC-3 | > 10¹⁴ | > 10¹⁴ | > 60 | > 60 |
| EX-18 | A-2 | OC-3 | 8.1 x 10¹² | 1.2 x 10¹² | 14.28 | 12.08 |
| EX-19 | A-3 | OC-3 | 3.3 x 10¹¹ | 3.9 x 10⁸ | 0.07 | 0.08 |
| EX-20 | A-4 | OC-3 | 7.3 x 10¹⁰ | 1.9 x 10⁹ | 0.16 | 0.14 |
| EX-21 | A-5 | OC-3 | 1.3 x 10¹² | 3.4 x 10⁹ | 0.12 | 0.14 |
| EX-22 | A-6 | OC-3 | 3.9 x 10¹² | 2.6 x 10⁹ | 0.11 | 0.13 |
| EX-23 | A-7 | OC-3 | 8.2 x 10¹⁰ | 1.5 x 10⁹ | 0.02 | 0.03 |
| EX-24 | A-8 | OC-3 | 2.4 x 10¹⁰ | 3.1 x 10⁸ | 0.00 | 0.00 |

Other modifications and variations to the present disclosure may be practiced by those of ordinary skill in the art, without departing from the spirit and scope of the present disclosure. It is understood that aspects of the various embodiments may be interchanged in whole or part or combined with other aspects of the various embodiments. The preceding description, given in order to enable one of ordinary skill in the art to practice the claimed disclosure, is not to be construed as limiting the scope of the disclosure, which is defined by the claims and all equivalents thereto.

## Claims

1. A method of forming a multilayer antistatic coating on a substrate, the method comprising:
a) providing a first coating composition comprising:
an aqueous media;
silica nanoparticles dispersed in the aqueous media, wherein the silica nanoparticles have an average particle size in a longest dimension of up to 100 nm; and
clay particles dispersed in the aqueous media, wherein the clay particles have an average particle size in the longest dimension in a range from 20 nm to 1000 nm;
wherein a weight ratio of the clay particles to the silica nanoparticles is in a range from 0.01 to 1, and wherein the first coating composition has a pH of less than or equal to 4;
b) contacting the first coating composition with a surface of a substrate;
c) at least partially drying the first coating composition to form a layer of an antistatic composition on the surface of the substrate, the antistatic composition comprising an amorphous matrix of the silica nanoparticles and clay particles dispersed in the amorphous matrix; and
d) providing an overcoat layer comprising a layer of an organic polymer disposed on the layer of the antistatic composition, thereby forming the multilayer antistatic coating on the substrate.

2. The method of claim 1, wherein providing the overcoat layer comprises coating a second coating composition onto the layer of the antistatic composition, and at least partially curing and/or at least partially drying the second coating composition to form the layer of the organic polymer, wherein the second coating composition comprises a fluoropolymer, a silicone, a hydrocarbon polymer, copolymer thereof, or blend thereof.

3. The method of any one of claims 1 to 2, wherein the first coating composition is essentially free of organic polymer.

4. The method of any one of claims 1 to 3, wherein the clay is a smectite clay or a montmorillonite clay.

5. The method of any one of claims 1 to 4, wherein the total amount of solids in the first coating composition is in a range from 1 weight percent to 50 weight percent of a total weight of the first coating composition.

6. The method of any one of claims 1 to 5, wherein the multilayer antistatic coating is substantially light transmissive.

7. The method of any one of claims 1 to 6, wherein the multilayer antistatic coating has an average surface resistivity of less than or equal to 10¹² ohms per square at 25 °C and at 50 percent relative humidity.

8. An article comprising a coated substrate provided with a multilayer antistatic coating obtainable according to the method of any one of claims 1 to 7.

9. An article comprising a substrate having a multilayer antistatic coating obtainable according to the method of claim 1 disposed thereon, the antistatic coating comprising a layer of an antistatic composition disposed on a major surface of the substrate, and an overcoat layer disposed on a major surface of the antistatic layer;
wherein the antistatic composition comprises:
an amorphous matrix of silica nanoparticles having an average particle size of up to 100 nm in a longest dimension; and
clay particles dispersed in the amorphous matrix of silica nanoparticles, the clay particles having an average particle size in the longest dimension in a range from 20 nm to 1000 nm; and
wherein the overcoat layer comprises a fluoropolymer, a silicone, a hydrocarbon polymer, copolymer thereof, or blend thereof.

10. The article of claim 9, wherein the layer of the antistatic composition is essentially free of organic polymer.

11. The article of any one of claims 9-10, wherein an amount of the clay particles in the multilayer antistatic composition comprises up to 50 percent by weight of the clay particles, based on a total weight of the antistatic composition.

## Patentansprüche

1. Verfahren zur Bildung einer mehrschichtigen, antistatischen Beschichtung auf einem Substrat, wobei das Verfahren Folgendes umfasst:
a) Bereitstellen einer ersten Beschichtungszusammensetzung, umfassend:
ein wässriges Medium;
Siliciumdioxid-Nanoteilchen, die in dem wässrigen Medium dispergiert sind, wobei die Siliciumdioxid-Nanoteilchen eine durchschnittliche Teilchengröße in einer längsten Abmessung von bis zu 100 nm aufweisen; und
Tonteilchen, die in dem wässrigen Medium dispergiert sind, wobei die Tonteilchen eine durchschnittliche Teilchengröße in der längsten Abmessung in einem Bereich von 20 nm bis 1000 nm aufweisen;
wobei ein Gewichtsverhältnis der Tonteilchen zu den Siliciumdioxid-Nanoteilchen in einem Bereich von 0,01 bis 1 liegt, und wobei die erste Beschichtungszusammensetzung einen pH-Wert von weniger als oder gleich 4 aufweist;
b) Inkontaktbringen der ersten Beschichtungszusammensetzung mit einer Oberfläche eines Substrats;
c) mindestens teilweises Trocknen der ersten Beschichtungszusammensetzung, um eine Schicht einer antistatischen Zusammensetzung auf der Oberfläche des Substrats zu bilden, wobei die antistatische Zusammensetzung eine amorphe Matrix der Siliciumdioxid-Nanoteilchen und Tonteilchen umfasst, die in der amorphen Matrix dispergiert sind; und
d) Bereitstellen einer Überzugsschicht, umfassend eine Schicht eines organischen Polymers, die auf der Schicht der antistatischen Zusammensetzung angeordnet ist, wodurch die mehrschichtige, antistatische Beschichtung auf dem Substrat gebildet wird.

2. Verfahren nach Anspruch 1, wobei das Bereitstellen der Überzugsschicht das Beschichten der Schicht der antistatischen Zusammensetzung mit einer zweiten Beschichtungszusammensetzung und das mindestens teilweise Aushärten und/oder das mindestens teilweise Trocknen der zweiten Beschichtungszusammensetzung, um die Schicht des organischen Polymers zu bilden, umfasst, wobei die zweite Beschichtungszusammensetzung ein Fluorpolymer, ein Silikon, ein Kohlenwasserstoffpolymer, ein Copolymer davon, oder eine Mischung davon umfasst.

3. Verfahren nach einem der Ansprüche 1 bis 2, wobei die erste Beschichtungszusammensetzung im Wesentlichen frei von organischem Polymer ist.

4. Verfahren nach einem der Ansprüche 1 bis 3, wobei der Ton ein Smectitton oder ein Montmorillonitton ist.

5. Verfahren nach einem der Ansprüche 1 bis 4, wobei die Gesamtmenge an Feststoffen in der ersten Beschichtungszusammensetzung in einem Bereich von 1 Gewichtsprozent bis 50 Gewichtsprozent eines Gesamtgewichts der ersten Beschichtungszusammensetzung liegt.

6. Verfahren nach einem der Ansprüche 1 bis 5, wobei die mehrschichtige, antistatische Beschichtung im Wesentlichen lichtdurchlässig ist.

7. Verfahren nach einem der Ansprüche 1 bis 6, wobei die mehrschichtige, antistatische Beschichtung einen durchschnittlichen Oberflächenwiderstand von weniger als oder gleich 10¹² Ohm pro Quadrat bei 25 °C und bei 50 Prozent relativer Feuchtigkeit aufweist.

8. Gegenstand, umfassend ein beschichtetes Substrat, das mit einer mehrschichtigen, antistatischen Beschichtung bereitgestellt ist, die nach dem Verfahren nach einem der Ansprüche 1 bis 7 erhältlich ist.

9. Gegenstand, umfassend ein Substrat, das eine darauf angeordnete mehrschichtige, antistatische Beschichtung aufweist, die nach dem Verfahren nach Anspruch 1 erhältlich ist, wobei die antistatische Beschichtung eine Schicht einer antistatischen Zusammensetzung, die auf einer Hauptoberfläche des Substrats angeordnet ist, und eine Überzugsschicht, die auf einer Hauptoberfläche der antistatischen Schicht angeordnet ist, umfasst;
wobei die antistatische Zusammensetzung Folgendes umfasst:
eine amorphe Matrix von Siliciumdioxid-Nanoteilchen mit einer durchschnittlichen Teilchengröße von bis zu 100 nm in einer längsten Abmessung; und
Tonteilchen, die in der amorphen Matrix von Siliciumdioxid-Nanoteilchen dispergiert sind, wobei die Tonteilchen eine durchschnittliche Teilchengröße in der längsten Abmessung in einem Bereich von 20 nm bis 1000 nm aufweisen; und
wobei die Überzugsschicht ein Fluorpolymer, ein Silikon, ein Kohlenwasserstoffpolymer, ein Copolymer davon, oder eine Mischung davon umfasst.

10. Gegenstand nach Anspruch 9, wobei die Schicht der antistatischen Zusammensetzung im Wesentlichen frei von organischem Polymer ist.

11. Gegenstand nach einem der Ansprüche 9 bis 10, wobei eine Menge der Tonteilchen in der mehrschichtigen, antistatischen Zusammensetzung zu bis zu 50 Gewichtsprozent die Tonteilchen, basierend auf einem Gesamtgewicht der antistatischen Zusammensetzung, umfasst.

## Revendications

1. Procédé de formation d'un revêtement antistatique multicouche sur un substrat, le procédé comprenant :
a) la fourniture d'une première composition de revêtement comprenant :
un milieu aqueux ;
des nanoparticules de silice dispersées dans le milieu aqueux, dans lequel les nanoparticules de silice ont une taille moyenne de particules dans une dimension de plus grande longueur allant jusqu'à 100 nm ; et
des particules d'argile dispersées dans le milieu aqueux, dans lequel les particules d'argile ont une taille moyenne de particules dans la dimension de plus grande longueur dans une plage allant de 20 nm à 1000 nm ;
dans lequel un rapport pondéral des particules d'argile par rapport aux nanoparticules de silice est dans une plage de 0,01 à 1, et dans lequel la première composition de revêtement a un pH inférieur ou égal à 4 ;
b) la mise en contact de la première composition de revêtement avec une surface d'un substrat ;
c) le séchage au moins partiel de la première composition de revêtement pour former une couche d'une composition antistatique sur la surface du substrat, la composition antistatique comprenant une matrice amorphe des nanoparticules de silice et des particules d'argile dispersées dans la matrice amorphe ; et
d) la fourniture d'une couche de recouvrement comprenant une couche d'un polymère organique disposée sur la couche de la composition antistatique, en formant de ce fait le revêtement antistatique multicouche sur le substrat.

2. Procédé selon la revendication 1, dans lequel la fourniture de la couche de recouvrement comprend le revêtement d'une deuxième composition de revêtement sur la couche de la composition antistatique, et le durcissement au moins partiel et/ou le séchage au moins partiel de la deuxième composition de revêtement pour former la couche du polymère organique, dans lequel la deuxième composition de revêtement comprend un fluoropolymère, une silicone, un polymère d'hydrocarbure, un copolymère de ceux-ci, ou un mélange de ceux-ci.

3. Procédé selon l'une quelconque des revendications 1 à 2, dans lequel la première composition de revêtement est pratiquement exempte de polymère organique.

4. Procédé selon l'une quelconque des revendications 1 à 3, dans lequel l'argile est une argile smectique ou une argile montmorillonitique.

5. Procédé selon l'une quelconque des revendications 1 à 4, dans lequel la quantité totale de matières solides dans la première composition de revêtement est dans une plage de 1 pour cent en poids à 50 pour cent en poids d'un poids total de la première composition de revêtement.

6. Procédé selon l'une quelconque des revendications 1 à 5, dans lequel le revêtement antistatique multicouche permet essentiellement la transmission de la lumière.

7. Procédé selon l'une quelconque des revendications 1 à 6, dans lequel le revêtement antistatique multicouche a une résistivité superficielle moyenne inférieure ou égale à 10¹² ohms par carré à 25 °C et à 50 pour cent d'humidité relative.

8. Article comprenant un substrat revêtu pourvu d'un revêtement antistatique multicouche pouvant être obtenu conformément au procédé selon l'une quelconque des revendications 1 à 7.

9. Article comprenant un substrat possédant un revêtement antistatique multicouche pouvant être obtenu conformément au procédé selon la revendication 1 disposé sur celui-ci, le revêtement antistatique comprenant une couche d'une composition antistatique disposée sur une surface principale du substrat, et une couche de recouvrement disposée sur une surface principale de la couche antistatique ;
dans lequel la composition antistatique comprend :
une matrice amorphe de nanoparticules de silice possédant une taille moyenne de particules allant jusqu'à 100 nm dans une dimension de plus grande longueur ; et
des particules d'argile dispersées dans la matrice amorphe de nanoparticules de silice, les particules d'argile possédant une taille moyenne de particules dans la dimension de plus grande longueur dans une plage allant de 20 nm à 1000 nm ; et
dans lequel la couche de recouvrement comprend un fluoropolymère, une silicone, un polymère d'hydrocarbure, un copolymère de ceux-ci, ou un mélange de ceux-ci.

10. Article selon la revendication 9, dans lequel la couche de la composition antistatique est pratiquement exempte de polymère organique.

11. Article selon l'une quelconque des revendications 9 à 10, dans lequel une quantité des particules d'argile dans la composition antistatique multicouche comprend jusqu'à 50 pour cent en poids des particules d'argile, sur la base d'un poids total de la composition antistatique.
